(19) Europäisches Patentamt
European Patent Office
Office européen des brevets

(11) EP 3 148 128 B1

(12) **EUROPEAN PATENT SPECIFICATION**

(45) Date of publication and mention
of the grant of the patent:
**08.05.2019 Bulletin 2019/19**

(51) Int Cl.:
*H04L 12/741* (2013.01)   *H04L 12/723* (2013.01)
*H04L 12/715* (2013.01)   *H04L 12/703* (2013.01)

(21) Application number: **16189544.6**

(22) Date of filing: **19.09.2016**

(54) **INFORMATION-CENTRIC NETWORKING WITH SMALL MULTI-PATH OR SINGLE-PATH FORWARDING STATE**

INFORMATIONSZENTRISCHES NETWORKING MIT KLEINEM MULTIPFAD ODER EINZELPFAD-WEITERLEITUNGSSTATUS

RÉSEAUX AXÉS SUR L'INFORMATION AVEC FAIBLE ÉTAT DE TRANSFERT PAR TRAJETS MULTIPLES OU SIMPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2015 US 201514867814**

(43) Date of publication of application:
**29.03.2017 Bulletin 2017/13**

(73) Proprietor: **Cisco Technology, Inc.**
**San Jose, CA 95134 (US)**

(72) Inventor: **GARCIA-LUNA-ACEVES, Jose J.**
**San Mateo, CA 94402 (US)**

(74) Representative: **Kazi, Ilya et al**
**Mathys & Squire LLP**
**The Shard**
**32 London Bridge Street**
**London SE1 9SG (GB)**

(56) References cited:
- YI CHENG ET AL: "A case for stateful forwarding plane", COMPUTER COMMUNICATIONS, ELSEVIER SCIENCE PUBLISHERS BV, AMSTERDAM, NL, vol. 36, no. 7, 29 January 2013 (2013-01-29), pages 779-791, XP028526438, ISSN: 0140-3664, DOI: 10.1016/J.COMCOM.2013.01.005
- M Ed. Mosko: "CCNx Label Forwarding (CCNLF)", , 21 July 2014 (2014-07-21), XP055272498, Retrieved from the Internet: URL:http://www.ccnx.org/pubs/ccnx-mosko-labelforwarding-01.pdf [retrieved on 2016-05-13]

EP 3 148 128 B1

## Description

## BACKGROUND

## Field

The present disclosure relates generally to information-centric networks (ICNs). More specifically, the present disclosure relates to an ICN architecture that replaces the Pending Interest Table with a Data Answer Touting Table (DART).

## Related Art

The proliferation of the Internet and e-commerce continues to fuel revolutionary changes in the network industry. Today, a significant number of information exchanges, from online movie viewing to daily news delivery, retail sales, and instant messaging, are conducted online. An increasing number of Internet applications are also becoming mobile. However, the current Internet operates on a largely location-based addressing scheme. The two most ubiquitous protocols, the Internet Protocol (IP) and Ethernet protocol, are both based on end-host addresses. That is, a consumer of content can only receive the content by explicitly requesting the content from an address (e.g., IP address or Ethernet media access control (MAC) address) that is typically associated with a physical object or location. This restrictive addressing scheme is becoming progressively more inadequate for meeting the ever-changing network demands.

Recently, information-centric network (ICN) architectures have been proposed in the industry where content is directly named and addressed. Content-Centric Networking (CCN) and Named Data Networking (NDN) are the leading Interest-based ICN approaches. In CCN, instead of viewing network traffic at the application level as end-to-end conversations over which content travels, content is requested or returned based on its unique name, and the network is responsible for routing content from the provider to the consumer. Note that content includes data that can be transported in the communication system, including any form of data, such as text, images, video, and/or audio. A consumer and a provider can be a person at a computer or an automated process inside or outside the CCN. A piece of content can refer to the entire content or a respective portion of the content. For example, a newspaper article might be represented by multiple pieces of content embodied as data packets. A piece of content can also be associated with metadata describing or augmenting the piece of content with information, such as authentication data, creation date, content owner, etc.

In existing interest-based ICN approaches, including CCN and NDN, routers (or nodes in the network) need to maintain a Pending Interest Table (PIT) in order to store the Interest state, including the interfaces from which Interests for specific named data objects (NDOs) are received and the interfaces over which such Interests are forwarded. The PIT allows NDOs that satisfy Interests to follow the reverse path back to the original requester while hiding the identity of the original requester. However, as the number of Interests handled by a router grows, so does the size of the PIT, which can be many orders of magnitude larger than the size of traditional routing tables because routers handle far more Interests than the number of routers in a network.

M Ed. Mosko, "CCNx Label Forwarding (CCNLF)", 21 July 2014, XP055272498, http://www.ccnx.org/pubs/ccnx-mosko-labelforwarding-01.pdf describes a method to use fixed-size flat-byte strings to forward CCNx packets with Hierarchically Structured Variable Length Identifiers (HSVLIs), thus simplifying the work done at a packet forwarder.

Yi Cheng, et al. "A case for stateful forwarding plane", 29 January 2013, pgs. 779-791, XP028526438 describes a design of a forwarding plane for a named data network and evaluates its data delivery performance under adverse conditions.

## DEFINITIONS

The terms used in the present disclosure are generally defined as follows (but their interpretation is not limited to such):

"HSVLI:" Hierarchically structured variable-length identifier, also called a Name. It is an ordered list of Name Components, which may be variable length octet strings. In human-readable form, it can be represented in a format such as ccnx:/path/part. Also, the HSVLI may not be human-readable. As mentioned above, HSVLIs refer to content, and it is desirable that they be able to represent organizational structures for content and be at least partially meaningful to humans. An individual component of an HSVLI may have an arbitrary length. Furthermore, HSVLIs can have explicitly delimited components, can include any sequence of bytes, and are not limited to human-readable characters. A longest-prefix-match lookup is important in forwarding packets with HSVLIs. For example, an HSVLI indicating an Interest in "/parc/home/bob" will match both "/parc/home/bob/test.txt" and "/parc/home/bob/bar.txt." The longest match, in terms of the number of name components, is considered the best because it is the most specific. Detailed descriptions of the HSVLIs can be found in U.S. Patent No. 8,160,069, entitled "SYSTEM FOR FORWARDING A PACKET WITH A HIERARCHICALLY STRUCTURED VARIABLE-LENGTH IDENTIFIER," by inventors Van L. Jacobson and James D. Thornton, filed 23 September 2009.

"Interest:" A request for a Content Object. The Interest specifies an HSVLI name prefix and other optional selectors that can be used to choose among multiple objects with the same name prefix. Any Content Object whose name matches the Interest name prefix (and, optionally, other requested parameters such as publisher key-ID match) satisfies the Interest.

"Content Object:" A data object sent in response to an Interest. It has an HSVLI name and a Content payload that are bound together via a cryptographic signature. Optionally, all Content Objects have an implicit terminal name component made up of the SHA-256 digest of the Content Object. In one embodiment, the implicit digest is not transferred on the wire, but is computed at each hop, if needed. In this disclosure, the term "Content Object" and the term "Named Data Object (NDO)" are exchangeable.

"Face:" In CCN, the term face is a generalization of the concept of an interface. A face may be a connection to a network or directly to an application party. A face may be configured to send and receive broadcast or multicast packets on a particular network interface, or to send and receive packets using point-to-point addressing in the underlying transport, or using a tunnel (for example a TCP tunnel). A face may also be the connection to a single application process running on the same machine, via an encapsulation like UDP or an OS-specific inter-process communication path. All messages arrive through a face and are sent out through a face. In this disclosure, the term "neighbor" is interchangeable with the term "face," referring to an incoming or outgoing interface of an Interest.

"Prefix:" In this disclosure, the term "prefix" can be used to refer to either a name of a specific content object or a name prefix for the content object.

"Anchor:" In this disclosure, the term "anchor" is used to refer to a router that advertises content. More specifically, a router (or a node) that advertises for some or all of the content corresponding to a prefix is referred to as an anchor of the prefix.

"DART:" In this disclosure, the capitalized acronym "DART" refers to a data structure (table) that stores the mapping between the destination-and-return token (dart) and faces of the routers.

"dart:" In this discloser, the lower case acronym "dart" refers to the destination-and-return token carried by an Interest, and should not be confused with the table "DART."

## SUMMARY

Aspects of the invention are set out in the independent claims and preferred features are set out in the dependent claims.

One embodiment of the present invention provides a router in an information-centric network (ICN). The router includes a receiving module configured to receive an interest for a piece of content. The interest indicates a name associated with the piece of content. The router further includes an interest-processing module configured to: determine whether the interest can be forwarded; in response to determining that the interest can be forwarded to a second router, obtain a label that is specific to the second router; and attach the label to the interest. The router also includes a forwarding module configured to forward the interest to the second router with the attached label.

In a variation on this embodiment, the forwarding module is further configured to send a response to the interest in response to the interest-processing module determining that the interest cannot be forwarded.

In a further variation, the interest-processing module is configured to determine that the interest cannot be forwarded based on one of: the piece of content cannot be found, no route can be found to a destination router advertising the piece of content, and the interest is traversing a loop; and the response sent by the forwarding module includes a negative acknowledgment.

In a further variation, the interest further indicates a hop count to a destination router advertising the piece of content, and the interest-processing module is configured to determine that the interest is traversing the loop based on routing information stored in the router and the hop count.

In a further variation, the interest-processing module is configured to determine that the router has a copy of the piece of content based on the name associated with the piece of content, and the response sent by the forwarding module includes a copy of the piece of the content.

In a further variation, the forwarding module is configured to: send the response to an originator of the interest along a reverse path traversed by the interest, or send the response to the originator of the interest along a path that is different from the reverse path traversed by the interest.

In a further variation, the interest further indicates a nonce specific to an originator of the interest. The router further comprises a response-processing module configured to: perform a lookup in a locally stored table for a matching entry based on the nonce, with the matching entry including one or more tuples and a respective tuple indicating a neighboring router and a label specific to the neighboring router; select a tuple from the one or more tuples; and label the response using the label indicated by the selected tuple. The forwarding module is configured to send the labeled response to a router indicated by the selected tuple.

In a variation on this embodiment, the interest further includes a previous label. The interest-processing module is configured to: perform a lookup in a locally stored table for a matching entry based on the previous label, with the matching entry indicating the second router and the label that is specific to the second router; and in response to the matching entry not being found, generate and store an entry in the local table, with the stored entry indicating the second router and the label that is specific to the second router.

In a further variation, attaching the label to the interest comprises replacing the previous label with the label that is specific to the second router.

## BRIEF DESCRIPTION OF THE FIGURES

FIG. 1 illustrates an exemplary architecture of a network, in accordance with an embodiment of the present invention.

FIG. 2 presents a diagram illustrating an exemplary Forwarding Information Base (FIB), in accordance with an embodiment of the present invention.

FIG. 3 presents a diagram illustrating an exemplary data-answer routing table (DART), in accordance with an embodiment of the present invention.

FIG. 4A presents a diagram illustrating an exemplary origin nonce table (ONT), in accordance with an embodiment of the present invention.

FIG. 4B presents a diagram illustrating an exemplary destination nonce table (DNT), in accordance with an embodiment of the present invention.

FIGs. 5A-5B illustrates how CCN-DART detects Interest loops, according to an embodiment of the present invention.

FIGs. 6A-6C illustrate how CCN-DART operates with single-path routing and a temporary routing-table loop, according to an embodiment of the present invention.

FIG. 7 presents an exemplary Interest-processing algorithm performed by a router when the router receives Interests from local consumers, in accordance with an embodiment of the present invention.

FIG. 8 presents an exemplary Interest-processing algorithm performed by a router when the router receives Interests from neighbors, in accordance with an embodiment of the present invention.

FIG. 9 presents an exemplary response-generating algorithm, in accordance with an embodiment of the present invention.

FIG. 10A presents an exemplary NDO-processing algorithm, in accordance with an embodiment of the present invention.

FIG. 10B presents an exemplary NACK-processing algorithm, in accordance with an embodiment of the present invention.

FIG. 11 presents a diagram presenting an exemplary architecture of a CCN-DART router, in accordance with an embodiment of the present invention.

FIG. 12 presents a diagram illustrating an exemplary operation of CCN-DART, in accordance with an embodiment of the present invention.

FIG. 13 illustrates an exemplary system for CCN-DART, in accordance with an embodiment.

In the figures, like reference numerals refer to the same figure elements.

## DETAILED DESCRIPTION

### Overview

Embodiments of the present invention provide a CCN system that implements Data Answer Routing Table (CCN-DART). More specifically, routers implementing CCN-DART no longer need to maintain a Pending Interest Table (PIT). Instead, a CCN-DART router maintains a data-answer routing table (DART), which is similar to a label-swapping table used in a label-switching network. An Interest states the name of the requested content, a hop count, a destination-and-return token (dart), and a nonce. The hop count is used to ensure correct Interest loop detection. The dart is used by forwarding routers to leave a trace of the path traversed by the Interest using local identifiers of the previous hop and the current hop. It changes on a hop-by-hop basis and is route-specific. The dart allows a named data object (NDO) or a negative acknowledgment (NACK) to be sent back to the content requester, without disclosing the source of the Interest. The nonce of an Interest is used by a content producer or a caching router to associate multiple paths traversed by Interests with the same originating router, without knowing the identity of that router. The nonces enable routers to forward Interests and NDOs or NACKs over the multiple paths established between content consumers and content providers, rather than requiring reverse-path forwarding.

### CCN Architecture

In general, CCN uses two types of messages: Interests and Content Objects. An Interest carries the hierarchically structured variable-length identifier (HSVLI), also called the "name," of a Content Object and serves as a request for that object. If a network element (e.g., router) receives multiple Interests for the same name, it may aggregate those Interests. A network element along the path of the Interest with a matching Content Object may cache and return that object, satisfying the Interest. The Content Object follows the reverse path of the Interest to the origin(s) of the Interest.

As mentioned before, an HSVLI indicates a piece of content, is hierarchically structured, and includes contiguous components ordered from a most general level to a most specific level. The length of a respective HSVLI is not fixed. In content-centric networks, unlike a conventional IP network, a packet may be identified by an HSVLI. For example, "abcd/bob/papers/ccn/news" could be the name of the content and identifies the corresponding packet(s), i.e., the "news" article from the "ccn" collection of papers for a user named "Bob" at the organization named "ABCD." To request a piece of content, a node expresses (e.g., broadcasts) an Interest in that content by the content's name. An Interest in a piece of content can be a query for the content according to the content's name or identifier. The content, if available in the network, is sent back from any node that stores the content to the requesting node. The routing infrastructure intelligently propagates the Interest to the prospective nodes that are likely to have the information and then carries available content back along the reverse path traversed by the Interest message. Essentially the Content Object follows the breadcrumbs left by the Interest message, thus reaching the requesting node.

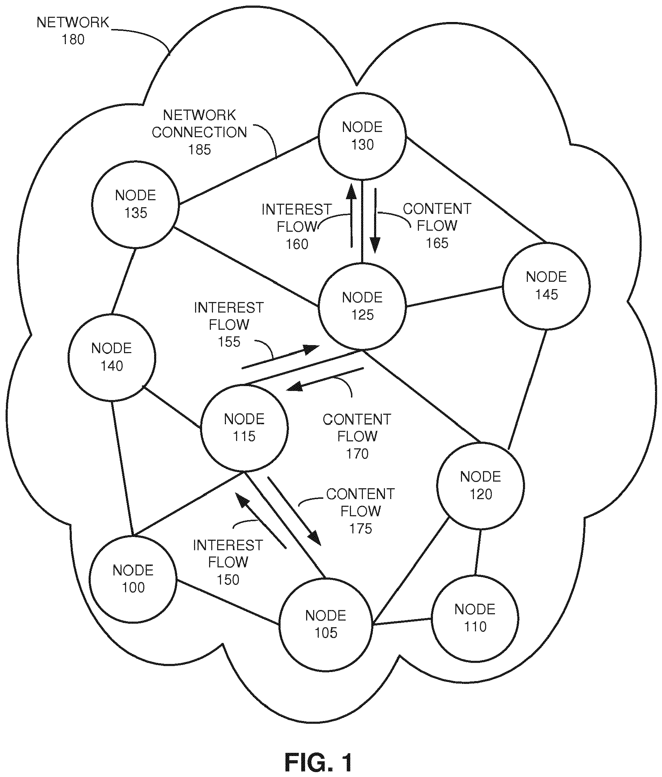

FIG. 1 illustrates an exemplary architecture of a network, in accordance with an embodiment of the present invention. In this example, a network 180 comprises nodes 100-145. Each node in the network is coupled to one or more other nodes. Network connection 185 is an example of such a connection. The network connection is shown as a solid line, but each line could also represent sub-networks or super-networks, which can couple one node to another node. Network 180 can be content-centric, a local network, a super-network, or a sub-network. Each of these networks can be interconnected so that a node in one network can reach a node in other networks. The network connection can be broadband, wireless, telephonic, satellite, or any type of network connection. A node can be a computer system, an end-point representing users, and/or a device that can generate Interest or originate content.

In accordance with an embodiment of the present invention, a consumer can generate an Interest for a piece of content and forward that Interest to a node in network 180. The piece of content can be stored at a node in network 180 by a publisher or content provider, who can be located inside or outside the network. For example, in FIG. 1, the Interest in a piece of content originates at node 105. If the content is not available at the node, the Interest flows to one or more nodes coupled to the first node. For example, in FIG.1, the Interest flows (Interest flow 150) to node 115, which does not have the content available. Next, the Interest flows (Interest flow 155) from node 115 to node 125, which again does not have the content. The Interest then flows (Interest flow 160) to node 130, which does have the content available. The flow of the Content Object then retraces its path in reverse (content flows 165, 170, and 175) until it reaches node 105, where the content is delivered. Other processes such as authentication can be involved in the flow of content.

In network 180, any number of intermediate nodes (nodes 100-145) in the path between a content holder (node 130) and the Interest generation node (node 105) can participate in caching local copies of the content as it travels across the network. Caching reduces the network load for a second subscriber located in proximity to other subscribers by implicitly sharing access to the locally cached content.

In conventional CCNs or NDNs, each node (also called as a router) maintains three major data structures, including a Forwarding Information Base (FIB), a Content Store (CS), and a Pending Interest Table (PIT). The forwarding plane uses information stored in these three tables to forward Interests toward nodes advertising copies of requested content, and to send NDOs or other responses back to consumers who requested them over reverse paths traversed by the Interests.

FIB is used to forward Interest packets toward potential source(s) of matching Content Objects. Typically, a routing protocol is used to populate the FIB among all nodes in the network. In conventional CCNs, the FIB entries are often indexed by the name prefixes, with each entry including a physical address of at least one face to which the matching Interest should be forwarded. In NDNs, the FIB entry for a name prefix also contains a stale time after which the entry could be deleted, the round-trip time through the interface, a rate limit; and status information stating whether it is known or unknown that the interface can or cannot bring data back. While forwarding Interest messages, longest-prefix-match lookups of names are performed at the FIB to find a matching entry.

Content Store (CS) is similar to the buffer memory used in an IP router. More particularly, CS temporarily buffers Content Objects that pass through this node, allowing efficient data retrieval by different consumers. When a router receives an Interest packet, it first checks whether there is a matching Content Object in its content store prior to issuing an Interest upstream.

Pending Interest Table (PIT) serves as a cache of Interest state. The PIT keeps track of neighbor to which NDO messages or control messages (e.g., NACKs) should be sent back in response to Interests. This preserves upstream and downstream network flow, allows Interest to not disclose their sources, and enables Interest aggregation. In CCN, only Interest packets are routed. In NDN, a PIT entry can include a vector or one or more tuples, with one tuple for each nonce processed for the same NDO name. Each tuple states the nonce used, the incoming faces, and the outgoing faces. Each PIT entry also has a lifetime, which typically is larger than the estimated round-trip time to a node having the requested NDO.

When a router receives an Interest, it checks whether there is a match for the content requested in its CS. In CNN, exact Interest-matching mechanism is used to find the matching content. If a match to the Interest is found, the router sends back an NDO over the reverse path traversed by the Interest. If no match is found in the CS, the router checks the PIT for an entry for the same content. In NDN where nonces are used to identify Interests, if the Interest states a nonce that differs from those stored in the PIT entry for the requested content, the router aggregates the Interest by adding the incoming face and the nonce to the PIT entry without forwarding the Interest. On the other hand, if the same nonce in the Interest is already listed in the PIT entry for the requested content, the router sends a NACK over the reverse path traversed by the Interest, indicating a loop has been detected. In CCN, aggregation is done if the Interest is received from a face that is not listed in the PIT entry for the requested content, and a repeated Interest received from the same face is simply dropped.

If the router does not find a match in its CS and PIT, the router forwards the Interest along a route (or multiple routes) listed in its FIB for the best prefix match. In NDN, a router can select a face to forward an Interest if such a face is known to bring content and its performance ranked higher than other faces that can also bring content. A router performs the ranking of the faces independently of other routers.

As discussed previously, maintaining a PIT and checking for matches in the PIT can be inefficient, because the size of the PIT grows in the order of the number of Interests handled by the routers, and such a number can be orders of magnitude more than the number of routers in a network. Hence, it is desirable to design an Interest-based ICN system that does not rely on PIT to return NDOs to their original requesters.

## CCN with Data Answer Routing Table (CCN-DART): Principle

The design of CCN-DART is based on the following observations. First, network simulation shows that, as the capacity of Content Stores increases, content caching makes the occurrence of Interest aggregation extremely rare. The inter-arrival times of Interest for the same content and round-trip times (RTTs) between consumers and Content Stores storing the requested content are such that content is available at caches by the time subsequent Interests requesting the same content arrive. This is the case even when the simulation parameters are set to favor Interest aggregation. On the other hand, independent of CS sizes, the number of PIT entries grows dramatically with the Interest submission rate, and Interest aggregation can lead to undetected Interest loops.

Second, the number of routers in a network is orders of magnitude smaller than the number of named data objects (NDOs), and thus the number of Interests requesting them. Hence, maintaining forwarding state based on the routes going through a router can be orders of magnitude smaller than maintaining forwarding state based on the Interests traversing the router.

Third, a correct Interest-forwarding strategy can be based on an ordering of the routers that forward a given Interest, rather than attempting to identify each Interest uniquely.

Lastly, there is no inherent reason to require reverse-path forwarding to be used to forward NDOs or NACKs sent in response to Interests, provided that the control plane supports multipath routing to name prefixes and the proper forwarding state is maintained efficiently.

A number of assumptions can be made in the description of CCN-DART. It can be assumed that Interests are retransmitted only by the originating consumers, rather than by the relaying routers. Routers are assumed to know which interfaces are neighboring routers and which interfaces are local consumers, and forward Interests on a best-effort basis. Furthermore, routers are assumed to use exact matching of Interest.

During operation, CCN-DART uses Interests, control messages (e.g., NACKs), and data objects (e.g., NDOs) to implement the exchange of content among nodes. More specifically, destination-and-return tokens (darts) and Interest nonces are used to enable correct forwarding of Interests, NDOs, and NACKs. The darts are local identifiers that can uniquely denote routes established between source and destination routers. The nonces are global identifiers that can associate two or more routes established between the same source and destination routers.

An Interest sent by a node $k$ requesting NDO $n(j)$ is denoted $I[n(j),h^l(k),ID^l(k),dart^l(k)]$, which states the requested NDO name ($n(j)$), a hop count ($h^l(k)$) from node $k$ to the nearest instance of name prefix $n(j)^*$ that is the best match for $n(j)$, a nonce ($ID^l(k)$) created by the originating router of the Interest, and a dart ($dart^l(k)$) used to establish anonymous routes back to the sources of the Interest. In some embodiments, the nonce and the dart can be included in a header field of the Interest packet, in a way that is similar to a label being part of the datagram header in label-swapping networking. A content object sent by router $i$ in response to Interest $I[n(j),h^l(k),ID^l(k),dart^l(k)]$ is denoted $D[n(j),sig(j),ID^l(i),dart^l(i)]$, which states the name ($n(j)$) of the NDO being sent, a signature payload ($sig(j)$) used optionally to validate the content object, the nonce ($ID^l(i)$), and the dart ($dart^l(i)$) to be used to forward the NDO. On the other hand, the control message (NACK) sent by router $i$ in response to Interest $I[n(j),h^l(k),ID^l(k),dart^l(k)]$ is denoted $NI[n(j),CODE,ID^l(i),dart^l(i)]$, where CODE states the reason for sending the NACK. Possible reasons for sending a NACK include: (a) an Interest loop is detected, (b) no route is found toward the requested content, (c) no content is found, and (d) the *DART* entry expired.

To implement the forwarding of Interests, NDOs and NACKs, a CCN-DART router maintains five tables: an optional content store ($CS^i$), a FIB ($FIB^i$), a data-answer routing table ($DART^i$), an origin nonce table ($ONT^i$), and a destination nonce table ($DNT^i$). $CS^i$ is the same as in conventional CCNs or NDNs. $CS^i$ lists the NDOs stored in local caches, and is indexed by the names of the NDOs. In some embodiments, the optional content store can be replaced with an optional requested content table (RCT), which not only serves as an index of local content but also keeps track of local requests for remote content. An entry in the RCT can include the name of the content, a pointer to the local storage where the content is stores, and a number of identifiers identifying a list of local consumers (if any) that have requested the content. The RCT could be implemented as two separate indexes, one for local content and one for requests for remote content.

To better understand CCN-DART, the concepts of predecessor, successor, and anchor are introduced here. At router *i*, a predecessor for an Interest regarding name prefix *n(j)\** is a router that forwarded an Interest to router *i* regarding NDO *n(j)*, which matches name prefix *n(j)\**, and a successor for Interests related to *n(j)\** is a router to which router *i* forwards an Interest regarding NDO *n(j)*, which matches name prefix *n(j)\**. An anchor of a prefix is a router that has advertised the prefix.

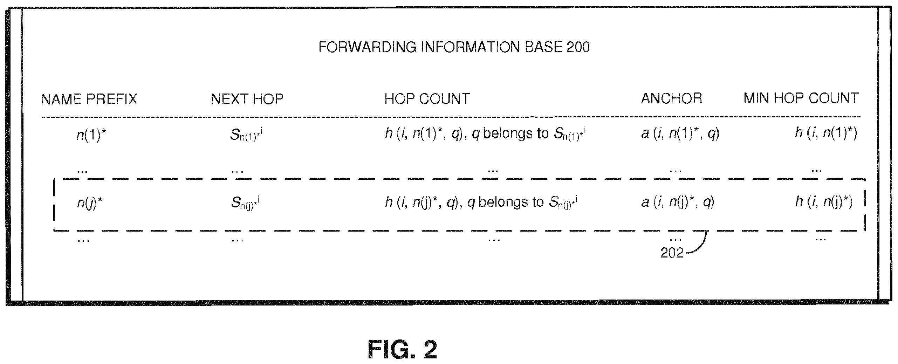

FIG. 2 presents a diagram illustrating an exemplary Forwarding Information Base (FIB), in accordance with an embodiment of the present invention. In FIG. 2, FIB 200 includes a number of entries indexed using content name prefixes. Each entry states the next hop to the content identified by the name prefix and a hop count to the node advertising the name prefix. For notation purposes, at router *i,* the FIB is denoted as $FIB^i$, and each

FIB entry for a name prefix *n(j)\** is denoted as $FIB^i_{n(j)^*}$, such as FIB entry 202. Note that each FIB entry may include a list of one or more tuples, one for each next hop in the set of successors of router *i* for *n(j)\**. The set of successors (next hops) of router *i* for *n(j)\** is denoted

as $S^i_{n(j)^*}$, and is included in the FIB entry $FIB^i_{n(j)^*}$.

For each interface q, $(q \in S^i_{n(j)^*}),$ the corresponding tuple states the hop count to a name prefix *n(j)\** through neighbor *q* (denoted as *h(i,n(j)\*,q)*) and the anchor reported by q for *n(j)\** (denoted as *a(i,n(j)\*,q)*). FIB 200 also stores a minimum hop count from the router to each known name prefix through any neighbor listed in FIB 200. More specifically, the minimum hop count from router *i* to name prefix *n(j)\** is denoted *h(i,n(j)\*)*.

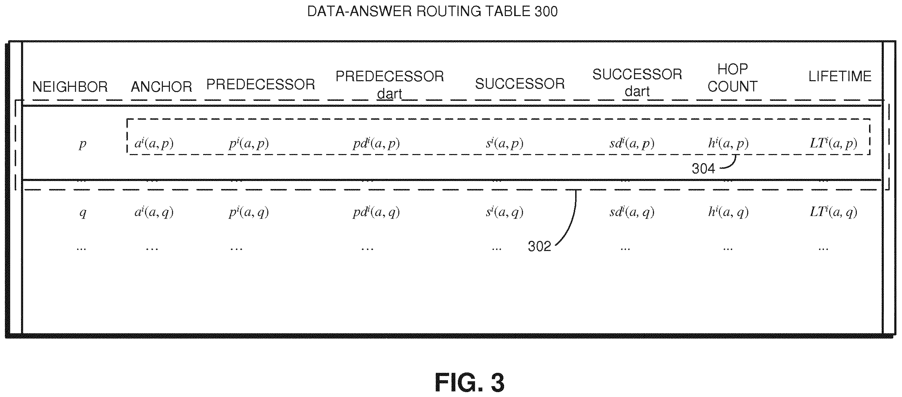

FIG. 3 presents a diagram illustrating an exemplary data-answer routing table (DART), in accordance with an embodiment of the present invention. The DART stores the mappings of predecessors to successors along paths to anchors. The DART stored at router *i* is denoted as *DART^i*. In FIG. 3, DART 300 include a plurality of entries organized according to neighboring faces of router *i*. An entry created for Interests received from router *p* and forwarded to router *s* toward a given anchor *a* is denoted as *DART^i(a,p)*. Entries created for one or more anchors corresponding to router *p* can form a sub-table in *DART^i*, such as sub-table 302. Each entry in sub-table 302, such as entry 304, specifies an anchor (*a^i(a,p)*), a predecessor (*p^i(a,p)*), a predecessor dart (*pd^i(a,p)*), a successor (*s^i(a,p)*), a successor dart (*sd^i(a,p)*), a hop count (*h^i(a,p)*), and a lifetime (*LT^i(a,p)*).

Anchor *a^i(a,p)* is the anchor (router *a*) for which the forwarding state is established at router *i*. Predecessor *p^i(a,p)* is the predecessor (router *p*) of the route to *a*. Predecessor dart *pd^i(a,p)* equals the dart received in Interest from *p* toward anchor *a*. Successor *s^i(a,p)* is the name of router s, which is selected by router *i* to forward Interests from *p* toward anchor *a*. Successor dart *sd^i(a,p)* is the dart included in Interests sent toward anchor *a* through router s.

Hop count *h^i(a,p)* is the number of hops to anchor *a* through successor s when the dart entry was established. *LT^i(a,p)* is the lifetime of the DART entry. The lifetime of a DART entry is decremented while the router stores it. A DART entry is deleted when its lifetime reaches zero. In contrast to the lifetime of an entry in a PIT, the lifetime of a DART entry is not a critical design parameter. An entry in a DART can remain in storage for a long period (e.g., many seconds) in the absence of topology changes. Furthermore, the removal of a DART entry causes only a minor slowdown of some Interests. In a stable network, it is most likely that the replacement of a DART entry states the same information as the erased entry.

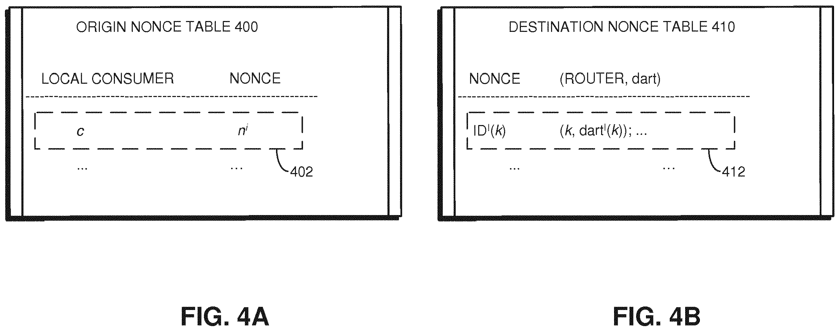

FIG. 4A presents a diagram illustrating an exemplary origin nonce table (ONT), in accordance with an embodiment of the present invention. The ONT stored by router *i* is denoted as *ONT^i*, and stores the mappings between the names of local consumers and the nonces assigned to them by router *i*. In FIG. 4A, entries in *ONT^i* 400, e.g., entry 402, are indexed by the local consumers. An entry for nonce *n^i* specifies the local identifier of a local consumer, and is denoted as *ONT^i(n^i)*.

FIG. 4B presents a diagram illustrating an exemplary destination nonce table (DNT), in accordance with an embodiment of the present invention. The DNT stored by router *i* is denoted *DNT^i*. In FIG. 4B, entries in *DNT^i* 410, e.g., entry 412, are indexed using the nonces received in Interests. An entry for a nonce *ID^l(k)* received in an Interest from router *k* is denoted as *DNT^i(ID^l(k))*, and contains a list of one or more tuples. Each tuple specifies the name of a router that sent an Interest containing the same nonce, and the dart stated in the Interest.

### CCN-DART: Loop Detection

CCN-DART implements a distance-based forwarding strategy to prevent Interest looping. Such a forwarding strategy ensures that a router accepts an Interest from router *k* only if the router determines that it is closer to the prefix through at least one next hop neighbor than *k* when *k* forwards the Interest. A detailed description of the distance-based forwarding strategy that can be used to prevent Interest loops can be found in the copending Patent Application No. 14/572,608 (US-A1-2016/0173386), entitled "SYSTEM AND METHOD FOR DISTANCE-BASED INTEREST FORWARDING," by inventor Jose J. Garcia-Luna-Aceves, filed 16 December 2014.

When routers implementing CCN-DART receive Interests, they first determine whether to accept the Interests using an Interest-forwarding rule (IFR), which states that a router *i* can accept an Interest *I[n(j),h^l(k),ID^l(k),dart^l(k)]* from a neighbor *k* if the following condition is satisfied:

$$\exists v \left( v \in S^{i}_{n(j)^{*}} \wedge h^{I}(k) > h(i, n(j)^{*}, v) \right).$$

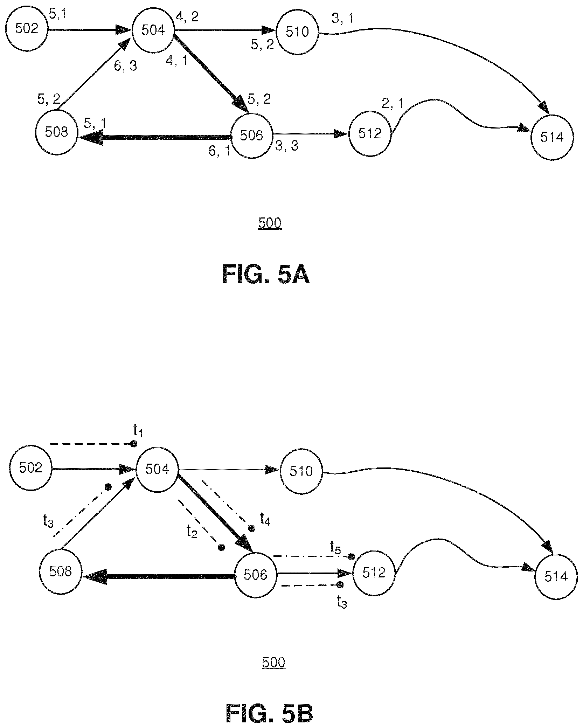

FIGs. 5A-5B illustrates how CCN-DART detects Interest loops, according to an embodiment of the present invention. As shown in FIG. 5A, network 500 includes a number of nodes, nodes 502-514. Multiple paths exist between nodes 502 and 514, and the routing table may include a loop: node 504-node 506-node 508-node 504. In FIG. 5A, at each link outgoing from a router to its neighbors, a pair of numbers is listed, indicating a hop count (the first number) through the neighbor to $n(j)$ (node 514) and the ranking of the neighbor according to the FIB (the second number). Note that for the same link there might be two pairs, and each pair is stored at the FIB in the router that is closer to the pair. For example, on the link from router 504 to router 506, two number pairs, pair (4, 1) and pair (5, 2) are shown next to the link. Number pair (4, 1) is adjacent

to router 504 and is stored in the FIB of router 504, and number pair (5, 2) is adjacent to router 506 and is stored in the FIB of router 506. More specifically, the number pair (4, 1) adjacent to router 504 indicates that the hop count to $n(j)$ via its neighbor 506 is 4, and neighbor 506 ranks number 1 in the FIB of router 504. On the other hand, the number pair (5, 2) adjacent to router 506 indicates that the hop count from its neighbor 504 to $n(j)$ is 5, and neighbor 504 ranks number 2 in the FIB of router 506.

One can use a tuple $(v,h,r)$ to indicate a neighbor, its hop count, and its ranking. Note that such a tuple can be entries listed in the FIB under name prefix $n(j)^{*}$. For example, $FIB^{node\ 504}$ can list tuples (node 506,4,1), (node 510,4,2), and (node 508,6,3). Similarly, $FIB^{node\ 502}$ can list a tuple (node 504,5,1); $FIB^{node\ 506}$ can list tuples (node 508,6,1), (node 504,5,2), and (node 512,3,3); and $FIB^{node\ 508}$ can list tuples (node 506,5,1) and (node 504,5,2). Note that partial FIB entries for nodes 510 and 512 are also shown in FIG. 5A.

FIG. 5B illustrates how CCN-DART routers forward Interests. In the example shown in FIG. 5B, router 504 received an Interest $I[n(j),h^{l}(\text{node } 502) = 5, ID^{l}, dart^{l}(\text{node } 502)]$ for name $n(j)$ from router 502 at time $t_{1}$. Given that $5 = h^{l}(\text{node } 502) > h(\text{node } 504, n(j)^{*}, \text{node } 506) = 4$, router 504 accepts the Interest because it has at least one neighbor (router 506) that satisfies the IFR. Router 504 then forwards the Interest to router 506 because router 506 ranks above router 510, which also satisfies the IFR. Note that, before forwarding, router 504 swaps the dart in the Interest, and forwards Interest $I[n(j),h^{l}(\text{node } 504) = 4, dt^{l}(\text{node } 504)]$ to router 506.

Router 506 receives $I[n(j),h^{l}(\text{node } 504) = 4, ID^{l}, dart^{l}(\text{node } 504)]$ at time $t_{2}$, and accepts it because $4 = h^{l}(\text{node } 504) > h(\text{node}506, n(j)^{*}, \text{node } 512) = 3$. Router 506 then uses router 512 as the next hop for the Interest because router 512 is the highest-ranked neighbor that satisfies the IFR. The route traversed by the Interest is indicated by a dashed line following time sequence $t_{1} \rightarrow t_{2} \rightarrow t_{3}$. Note that each router along the way swaps the dart included in the Interest to ensure that the returning NDO can follow the reverse path of the Interest.

Similarly, the Interest generated by router 508 is forwarded to router 512 toward $n(j)$ (the route is indicated by a different dashed line following time sequence $t_{3} \rightarrow t_{4} \rightarrow t_{5}$) without traversing a loop, because each relaying router must satisfy the IFR.

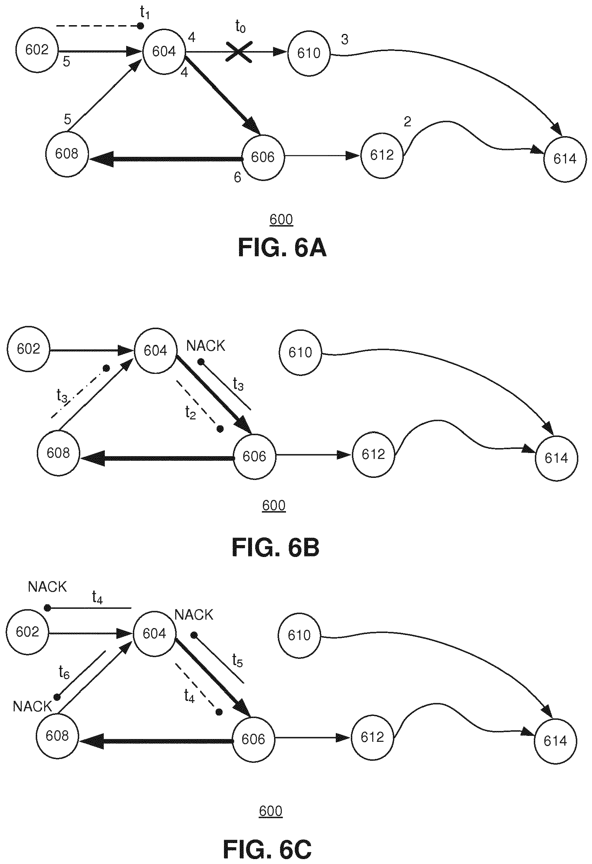

FIGs. 6A-6C illustrate how CCN-DART operates with single-path routing and a temporary routing-table loop, according to an embodiment of the present invention. In the figures, network 600 includes a number of nodes, nodes 602-614. In FIG. 6A, each router has a single next hop and one hop count for each prefix listed in its FIB. For example, for a name prefix $n(j)^{*}$ advertised by router 614, router 604 lists a hop count of 4 via neighbor router 610 (before link (node 704, node 710) fails), and router 606 lists a hop count of 6 via neighbor router 608. Note that the distance from a router to name prefix $n(j)^{*}$ may not be directly proportional to the hop counts of the paths. For example, link (node 606, node 612) may have limited bandwidth or long delays; hence, node 606 may prefer the path through node 608 to reach $n(j)^{*}$ at node 614.

When the link between router 604 and router 610 fails, router 606 updates its FIB to reflect the link failure at time $t_{0}$, as shown in FIG. 6A. Router 704 now lists a hop count of 4 via neighbor router 706. Note that such a link failure results in routers in network 600 having inconsistent FIB states for $n(j)$ while Interests are being forwarded. For example, router 706 has not yet updates its FIB, which can lead to a temporary routing table loop. At time $t_{1}$, router 602 sends an Interest $I[n(j),h^{l}(\text{node } 602) = 5, ID^{l}, dart^{l}(\text{node } 602)]$ for name $n(j)$ to router 604. FIG. 6B shows that router 604 forwards the Interest to router 606 at time $t_{2}$. FIG. 6B also shows that router 606 responds to the Interest with a NACK at time $t_{3}$, because $4 = h^{l}(\text{node } 604) \not> h(\text{node } 606, n(j)^{*}, \text{node } 608) = 6$, which violates the IFR. The NACK will indicate the reason for the NACK as loop detected. The NACK will eventually be forwarded all the way to the originator of the Interest, router 602, at time $t_{4}$, as shown in FIG. 6C.

FIG. 6B also shows that, at time $t_{3}$, router 608 sends an Interest $I[n(j),h^{l}(\text{node } 608) = 5, ID^{l}, dart^{l}(\text{node } 608)]$ for name $n(j)$ to router 604. Such an Interest also prompts a NACK from router 606 at time $t_{5}$ due to IFR violation, as shown in FIG. 6C. FIG. 6C also illustrates that router 604 forwards the NACK from router 606 to router 608 at time $t_{6}$. Within a finite time, $FIB^{node\ 604}$, $FIB^{node\ 606}$, and $FIB^{node\ 608}$ are updated to reflect the new topology state. More specifically, the FIB for node 606 may no longer list node 608 as its next hop, and Interests from node 602 regarding $n(j)^{*}$ can be forwarded along the chain of nodes 604, 606, and 612 toward $n(j)^{*}$, i.e., node 614. Similarly, within a finite time, Interests from node 608 regarding $n(j)^{*}$ can be forwarded to nodes 606 and 612 toward $n(j)^{*}$. It can be shown that no Interest loop will go undetected in CCN-DART.

## CCN-DART: Maintaining Forwarding State

As in NDN and CCN, routers in CCN-DART maintain routes to anchors of name prefixes, and populate their routing tables using a routing protocol operating in the control plane.

In NDN and CCN, the response to an Interest takes the reverse path traversed by the Interest. The path is incrementally stored in the PITs of the routers along the path. In CCN-DART, there are no PITs in routers; instead, the routers maintain DARTs, ONTs, and DNTs. DARTs and ONTs can allow Interest responses to be sent back to the correct consumers over reverse paths of the Interests. On the other hand, DNTs can enable the forwarding of an NDO message of NACK back to the Interest source over a path that may not be the reverse path of the Interest.

The dart mappings stored in DARTs are similar to the label mappings in the packet-switching networks. These mappings can be used to allow multiple Interests asking for NDOs associated with the same name prefix to be multiplexed in the same route segments between the originating routers and an anchor of the prefix or a cache site of the content. In addition to the darts, which are locally unique identifiers, routers can also create globally unique nonces to unambiguously associate local consumers with Interests sent on their behalf without revealing the identities of the local consumers.

In this disclosure, it is assumed that the nonce table at a router has been populated with all the nonces locally assigned to local consumers, and that DART entries are silently deleted when their lifetime expires. For convenience, it is also assumed that an anchor of a name prefix stores all the NDOs associated with the prefix in its CS. In addition, it is assumed that the control plane updates the FIB to reflect any changes in hop counts to prefixes resulting from topology changes. For example, if router $i$ detects that connectivity to a neighbor k is lost, it deletes all entries in DART$^i$ for which $k$ is the predecessor or the successor of a path toward any anchor.

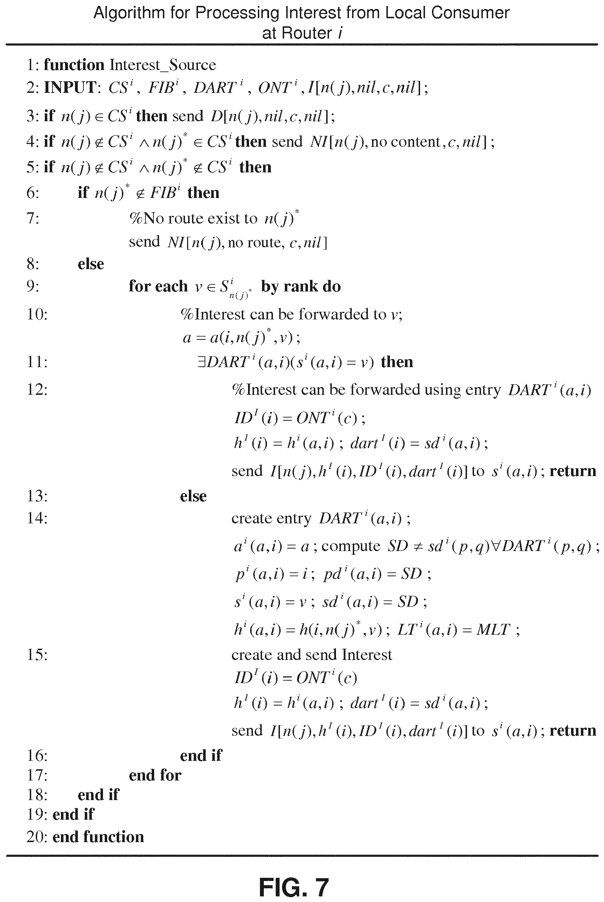

FIG. 7 presents an exemplary Interest-processing algorithm performed by a router when the router receives Interests from local consumers, in accordance with an embodiment of the present invention. For simplicity, it is assumed that content requests from local consumers are assumed to be Interests stating the name of an NDO ($n(j)$), an empty hop count (nil), the name of the local consumer ($c$), and an empty dart (nil).

When router $i$ receives an Interest from local consumer c, it checks its content store for the requested content and returns, if any, a matching NDO (line 3 in FIG. 7). If CS$^i$ includes the prefix but not the matching NDO, router $i$ responds by sending a NACK to the consumer, indicating that no content can be found (line 4 in FIG. 7). Otherwise, router $i$ checks its FIB for a matching prefix. No matching FIB entry can prompt the return of a NACK, indicating that no route exists to the requested content (line 7 in FIG. 7).

If there is a matching FIB entry, router $i$ uses the highest ranked neighbor and forwards an Interest (lines 9-15 in FIG. 7). More specifically, if a DART entry exists for the selected successor of the Interest, the corresponding successor dart is used as the dart included in the outgoing Interest (lines 11-12 in FIG. 7). Otherwise, a new successor dart is created and a new DART entry is stored before the Interest is forwarded (lines 14-15 in FIG. 7). When forwarding the Interest, router $i$ also inserts the nonce, as indicated by the ONT, assigned to consumer c into the Interest (lines 12 and 15 in FIG. 7).

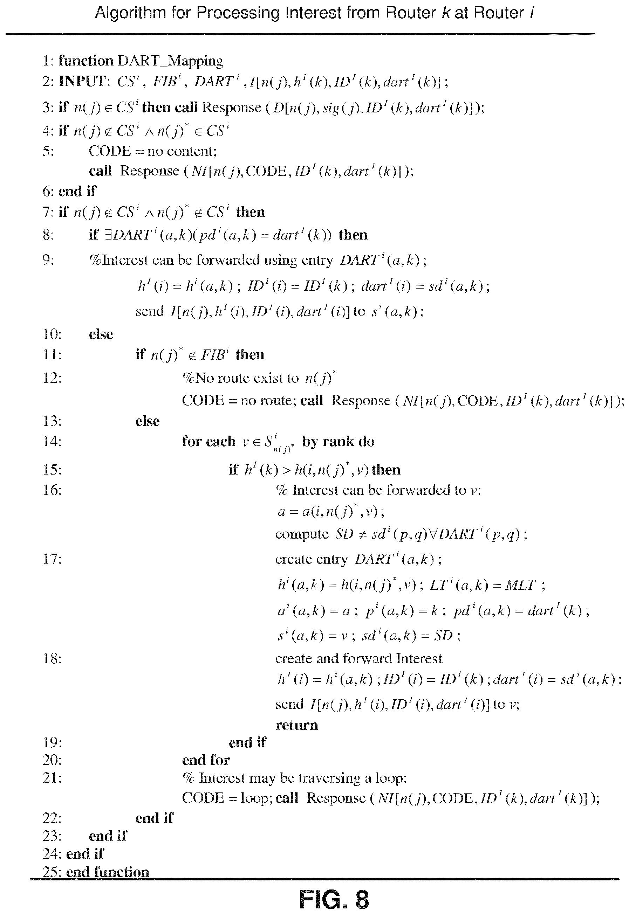

FIG. 8 presents an exemplary Interest-processing algorithm performed by a router when the router receives Interests from neighbors, in accordance with an embodiment of the present invention. When router $i$ receives an Interest from a neighbor $k$, it checks its content store for the requested content and returns, if any, a matching NDO (line 3 in FIG. 8). If CS$^i$ includes the prefix but not the matching NDO, router $i$ sends back a NACK to router $k$, indicating that no content can be found (line 4 in FIG. 8).

If the content is not cached locally, router $i$ determines whether a DART entry exists for the dart stated in the Interest from router $k$, i.e., if a predecessor dart is the same as the dart stated in the Interest. The existence of a matching entry in DART means that the IFR has been satisfied by a previous Interest on the same route to an anchor of the prefix and the existing mapping can be used. Consequently, such a DART entry can be used to forward Interest. More specifically, the successor specified by the DART entry is the router to which the Interest is forwarded, and the dart included in the forwarded Interest is the successor dart specified by the DART entry (line 9 in FIG. 8). Note that the entry in DART$^i$ for the anchor-predecessor pair ($a,k$) establishes a mapping from the dart used by router $k$ in Interests that can be resolved by anchor a (predecessor dart) to the dart used by router $i$ in Interests that can be resolved by anchor $a$ and forwarded to router $v$ (successor dart). The predecessor-successor mapping stored in the DARTs of routers from router $i$ to an anchor $a$ denotes route segments that can be used to forward Interests toward $a$ unambiguously. Conversely, the sequence of successor-predecessor mappings stored along the same path can be used to forward Interest responses (e.g., NDOs and NACKs) to the origins of Interests unambiguously.

If there is no matching DART entry found, router $i$ needs to find a successor for the received Interest and create a DART entry. A NACK will be sent if no entry can be found in FIB$^i$ for $n(j)$* (line 11 in FIG. 8) or the IFR is not satisfied (line 21 in FIG. 8). Otherwise, router $i$ selects the highest-ranked neighbor router $v$ that satisfies the IFR and creates a DART entry (lines 14-20 in FIG. 8). Router $v$ provides a path that has a hop count toward the requested content that is strictly smaller than the hop count stated in the received Interest. The newly created DART entry maps the dart included in the received Interest (predecessor dart) to a new dart created for a route to the selected anchor through router *v* (successor dart). Note that the new dart is created at router *i* as a local unique identifier. When generating the new dart, router *i* needs to make sure that the new dart does not duplicate any existing dart. In some embodiments, the dart can include a 16- or 32-bit number. The length and format of the dart can vary. For example, the dart may also include alphanumeric strings of various lengths. After the new DART entry is created, the to-be-forwarded Interest is created by replacing the dart included in the received Interest with the successor dart of the new DART entry.

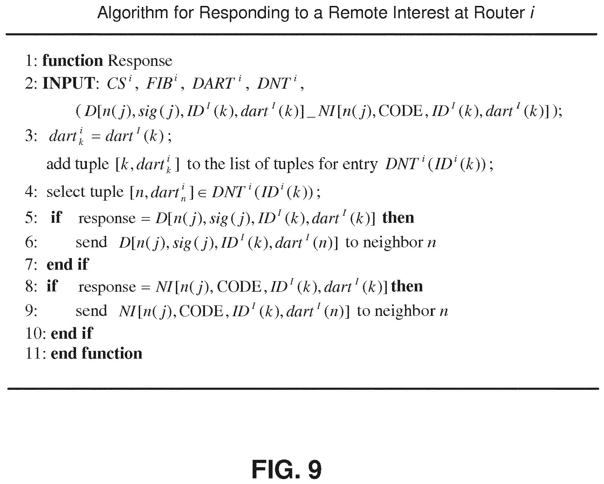

In the algorithm shown in FIG. 8, router *i* may also call a Response function to send back an NDO message of a NACK message in response to the received Interest (lines 3, 5, 12, and 21 in FIG. 8). FIG. 9 presents an exemplary response-generating algorithm, in accordance with an embodiment of the present invention. Before router *i* sends out a response (e.g., an NDO or a NACK), router *i* adds the mapping between the (node, dart) pair and the nonce to its DNT (line 3 in FIG. 9). For simplicity, it is assumed that only those routers that respond to Interest from remote consumers store information in their DNT. The relaying router does not store such information. Note that, from FIG. 9, one can see that, when sending the response, router *i* may choose a path that is not the reverse path of the Interest (line 4 in FIG. 9). For example, router *i* can choose a router *n,* which is different from router *k*, from the corresponding DNT entry to send the response. Although the algorithm shown in FIG. 9 does not explicitly disclose how to select a specific router from the many routers specified by the corresponding DNT entry, it makes clear the use of nonces and darts from the forwarding of responses to the correct consumer over one of many paths traversed by different prior Interests between the same routers.

As discussed previously, Interests can be forwarded to the same anchor over multiple paths, with each path being identified by a different set of dart mappings. The router that responds to the Interest stores in its DNT the mappings between the nonces included in the Interests and the routes over which the Interests were received (identified by the neighbor routers and darts in the Interests). Given that nonces are assigned with a low probability of collision, an NDO message or NACK can be sent by the responding router over a path that is different from the one traversed by the Interest. This can enable load balancing, which is beyond the scope of this disclosure.

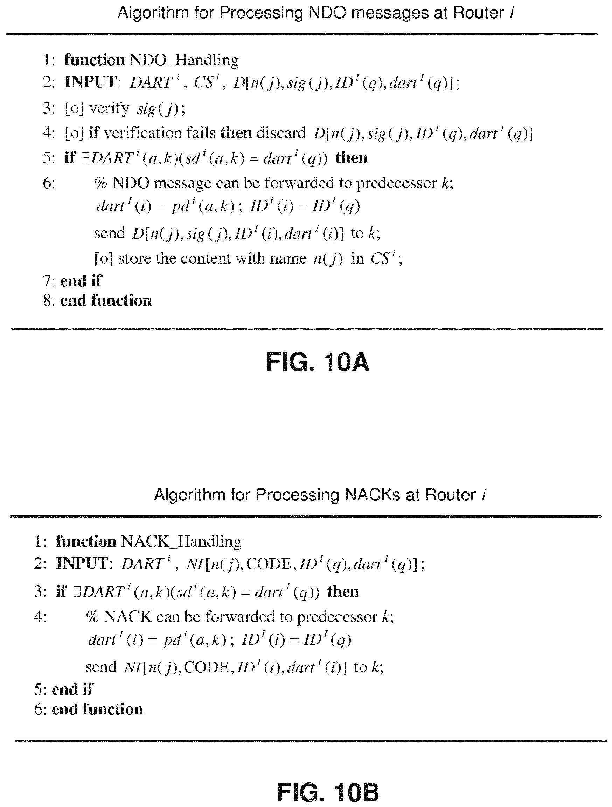

FIG. 10A presents an exemplary NDO-processing algorithm, in accordance with an embodiment of the present invention. A router accepts an NDO message received from a neighbor only if the router has a DART entry with a successor dart matching the dart stated in the NDO message (line 5 in FIG. 10A). The router may optionally verify the signature of the NDO (line 3 in FIG. 10A), and optionally store the NDO it receives (line 6 in FIG. 10A). Note that, when forwarding the NDO, the router also swaps the dart in the NDO using the predecessor dart in the corresponding DART entry (line 6 in FIG. 10A).

FIG. 10B presents an exemplary NACK-processing algorithm, in accordance with an embodiment of the present invention. A router forwards a NACK only if the router has a DART entry with a successor dart matching the dart stated in the NACK (line 3 in FIG. 10B). When forwarding the NACK, the router swaps the dart in the NACK using the predecessor dart in the corresponding DART entry (line 4 in FIG. 10B).

NDN supports multicasting by the reverse path forwarding (RPF) of responses to Interests over paths traversed by aggregated Interests. Interests serve the dual purpose of maintaining multicast forwarding trees (MFT) and pacing multicast sources. CCN-DART also supports multipoint communication using the RPF approach, but separates the establishment of an MFT from the mechanisms used to pace a source or disseminate multicast data over the tree.

CCN-DART uses Content Stores and multicast data answer routing tables (MDART) to maintain MFTs. A single dart can be used to denote all the predecessors and successors in the MFT of a group at each router. This means that a single dart can be used to label all the branches of the MFT of a multicast group. The dart used for multicast group name $g(j)$ is denoted as $d(g(j))$ and can be made part of the group name to simplify its dissemination.

A router with local receivers of a multicast group maintains the mapping of the names of local receivers to the name of the multicast group in its RCT. The MDART at router i is denoted by $MDART^i$ and is indexed by the names of the multicast groups for which the router forwards traffic. The entry for multicast group with name $g(j)$ in $MDART^i$ states: the dart of the group ($d(g(j))$), the successor selected by router $i$ to join the group, the set of routers (predecessors) that requested to join $g(j)$ through router $i,$ and the hop-count distance to the anchor of $g(j)$ when router $i$ established the MDART entry for the group ($h^i(g(j))$).

If router $i$ has local receivers for group $g(j)$, then it sends a join request (JR), denoted as $JR[g(j),h^J(i),ID^J(i),dart^J(i)],$ where $h^I(i) = h^i(g(j))$ and $dart^J(i) = d[g(j)]$. The forwarding of JRs is based on FIB entries and is similar to the forwarding of Interests. A relay router can forward a JR towards the anchor of $g(j)$ in two cases. If no MDART entry exists and IFR is satisfied, an MDART entry is created for the group. If an MDART entry exists, then the router simply adds a new predecessor for the group in the existing MDART entry. Negative acknowledgments may be sent if no routes to $g(j)$ are found, the IFR is not satisfied, or MDART entries become invalid due to topology changes.

Multicast data dissemination or pacing of multicast sources is beyond the scope of this disclosure.

### CCN-DART: Router Architecture

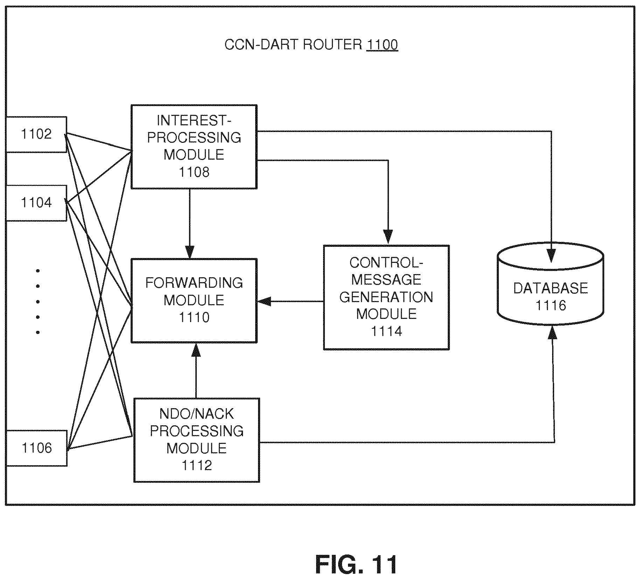

FIG. 11 presents a diagram presenting an exemplary architecture of a CCN-DART router, in accordance with an embodiment of the present invention. In FIG. 11, CCN-DART router 1100 includes a number of faces, such as faces 1102, 1104, and 1106; an Interest-processing module 1108; a forwarding module 1110; an NDO/NACK processing module 1112; a control-message generation module 1114, and a database 1116.

Faces 1102-1106 can include not only physical interfaces but also application processes capable of sending and receiving packets, including Interests and NDOs. Interest-processing module 1108 is responsible for processing the Interests received on the various faces. In some embodiments, Interest-processing module 1108 determines whether to accept an incoming Interest based on the aforementioned Interest-forwarding rule (IFR). If the Interest is accepted, Interest-processing module 1108 checks the DART maintained in database 1116 to find a dart mapping, and swaps the dart included in the Interest based on the mapping. Interest-processing module 1108 may further create a nonce (if the Interest is received from a local consumer) for the Interest. Forwarding module 1110 is responsible for forwarding packets, such as Interests or NDOs, to the faces. In some embodiments, forwarding module 1110 forwards the Interests/NDOs based on the dart mapping. Control-message generation module 1114 generates control messages, which can include different NACK messages, when Interest-processing module 1108 rejects or drops an Interest. In some embodiments, control-message generation module 1114 generates NACK messages under various conditions, including but not limited to when: an Interest loop is detected, no route is found toward the requested content, no content is found, and the corresponding DART entry expires. A NACK message in response to an Interest for name $n(j)$ is denoted as $NI[n(j),\text{CODE},ID^l(k),dart^l(k)]$, where CODE states the condition under which the NACK is sent. NDO/NACK processing module 1112 is responsible for processing NDO/NACK messages received in response to Interests. In some embodiments, NDO/NACK processing module 1112 checks the DART maintained in database 1116 to find a dart mapping, and swaps the dart included in the NDO/NACK message based on the mapping. Database 1116 stores the data structures needed for CCN-DART operation: the FIB, the DART, the ONT, and the DNT. Database 1116 optionally stores a Content Store.

### CCN-DART: Exemplary Operation

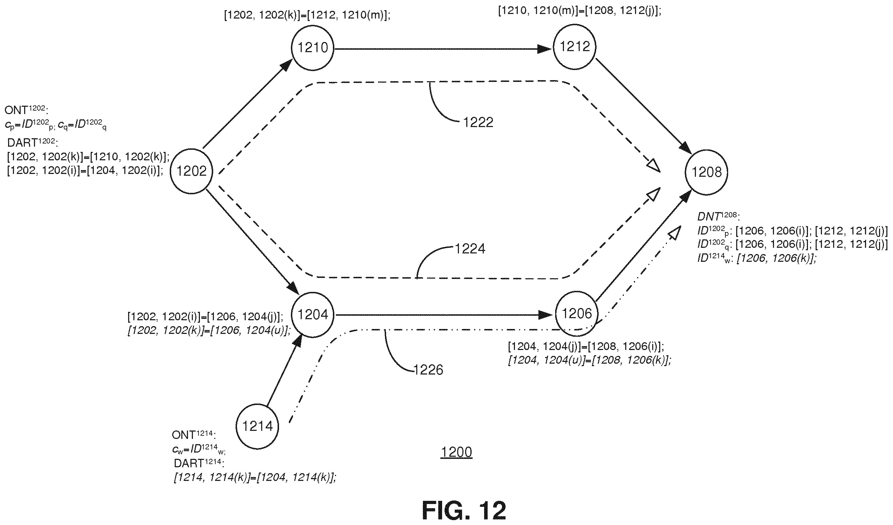

FIG. 12 presents a diagram illustrating an exemplary operation of CCN-DART, in accordance with an embodiment of the present invention. More specifically, FIG. 12 illustrates how routes use darts and nonces to label Interests and associate Interests with NDO messages and NACKs.

In FIG. 12, network 1200 includes a number of nodes, such as nodes 1202-1214. In the example shown in FIG. 12, router 1202 and router 1214 have local consumers originating the Interests that request NDOs regarding name prefixes advertised by router 1208. The arrowed lines indicate the next hops to content (with a name $n(j)$) advertised by router 1208 according to the FIB entries stored in the routers. FIG. 12 also shows the DART entries of a router for anchor 1208, listed next to each router. Moreover, ONT entries at routers 1202 and 1214 and DNT entries at router 1208 are also shown in FIG. 12, all listed next to the corresponding routers. For example, the list next to router 1202 includes its ONT entries and DART entries for anchor 1208, and the list next to router 1208 includes its DNT entries.

Router 1202 has two content consumers ($c_p$ and $c_q$). At router 1202, Interests originated from router 1202 on behalf of consumers $c_p$ and $c_q$ are labeled with nonces $ID_p^{1202}$ and $ID_q^{1202}$, respectively. Similarly, router 1214 uses nonce $ID_w^{1214}$ to label Interests it originates on behalf of local consumer $c_w$.

The DART mappings maintained at router 1202 show that the predecessor and predecessor dart pair [1202,1202($i$)] maps to the successor and successor dart pair [1204,1202($i$)]. At router 1204, [1202,1202($i$)] maps to [1206,1204($j$)]; and at router 1206, [1204,1204($j$)] maps to [1208,1206($i$)]. At router 1208, the DART entry for the content only specifies the predecessor and predecessor dart pair [1206,1206($i$)]. Note that indices $i, j, k, m, u$ shown in FIG. 12 are the indices used in the individual DART. For example, 1202 ($i$) means the $i_{th}$ entry in the DART maintained by router 1202. The aforementioned mappings at routers 1202, 1204, 1206, and 1206 denote the routes (node 1202, node 1204, node 1206, node 1208), (node 1204, node 1206, node 1208), and (node 1206, node 1208) uniquely, as indicated by dashed line 1222.

Similarly, DART mappings shown in FIG. 12 also indicate that [1202,1202($k$)] maps to [1210,1202($k$)] at router 1202, [1202,1202($k$)] maps to [1212,1210($m$)] at router 1210, and [1210,1210($m$)] maps to [1208,1212($j$)] at router 1212; and router 1208 maintains DART entry [1212,1212($j$)]. This set of DART mappings denotes route (node 1202, node 1210, node 1212, node 1208), and sub-paths to router 1208, including (node 1210, node 1212, node 1208) and (node 1212, node 1208), as indicated by dashed arrow 1224.

Dashed arrow 1226 indicates the route from router 1214 to anchor 1208, i.e., (node 1214, node 1204, node 1206, node 1208). The set of DART mappings for this route is shown *italicized* in FIG. 12.

All the Interests originated by consumers $c_p$, $c_q$, and $c_w$ regarding content advertised by anchor 1208 can be routed toward router 1208 using the same few darts shown in FIG. 12, regardless of the number of prefixes and Interests. Therefore, compared with PITs that have unique entries for Interests, the amount of storage used for DARTs is much smaller. Given that an NDO or NACK specifies the successor dart and the nonce stated in the Interest it answers, NDOs and NACKs can be forwarded correctly from router 1208 (or a router along the way to router 1208 that caches the requested content) to router 1202 or 1214 unambiguously. Furthermore, routers 1202 and 1214 can use the entries in their ONTs and nonces in the responses they receive to send the responses to the correct local consumers.

In addition to supporting correct Interest forwarding and correct reverse-path forwarding of NDO messages and NACKs using DARTs and ONTs, CCN-DART can also support forwarding of NDOs and NACKs to routers originating Interests over paths not traversed by the Interests. As shown in FIG. 12, when router 1208 receives Interests from neighbors 1206 and 1212, it stores the mappings between nonces and the successor darts in the received Interests in its DNT ($DNT^{1208}$), such that $ID_p^{1202}$ maps to router and dart pairs [1206, 1206(i)] and [1212, 1212(j)], $ID_q^{1202}$ maps to [1206, 1206(i)] and [1212, 1212(j)], and $ID_w^{1214}$ maps to [1206, 1206(k)]. Accordingly, router 1208 can send an NDO message or a NACK to the origin of an Interest stating nonce $ID_p^{1202}$ or $ID_q^{1202}$ through neighboring router 1206 or 1212, without having to use the reverse path of the Interest. In other words, to send NDOs or NACKs back to router 1202, router 1208 can choose the route indicated by dashed line 1222 or the route indicated by dashed line 1224. The selection of the route can be determined by various factors, such as the condition of the route or the need for load-balancing. For example, if route 1222 is congested, router 1208 may respond to Interests originated from router 1202 by sending NDOs or NACKs through route 1224. In addition, if router 1208 received many Interests originated from router 1202, router 1208 may send part of the responses through route 1222 and the other part of the responses through route 1224.

As discussed previously, the CCN with Data Answer Routing Table (CCN-DART) system implements a forwarding strategy for Interest-based ICN that does not require pending Interest tables (PITs) to operate. CCN-DART operates by requiring that FIBs store the next-hop neighbors and the hop count through such neighbors to named content, and by having each Interest state the name of the content requested, the hop count from the relaying router to the content, a nonce that is unique to the consumer requesting the content, and a destination and return token (dart) that is unique to the route traversed by the Interest. Interests are not aggregated, and Interest loop detection is based on distances to content prefixes. The forwarding states of the Interests are maintained by the DARTs kept at each router. A DART entry maps the incoming face and the outgoing face of Interests traversing a segment of the network. The state of a DART is a function of routes traversed toward routers that advertise content prefixes, rather than the routes traversed by individual Interests requesting specific NDOs, as in conventional CCN or NDN networks. In addition, the nonce included allows responses to Interests to be sent back to the originating router of the Interests over paths that are not the reverse path of the Interests.

Using DARTs to maintain the forwarding states of Interests shows greater advantages over the approach that keeps the per-Interest forwarding state in the PIT, especially when the rate of content requests is high. The size of the PITs can grow dramatically as the rate of content requests increases, whereas the size of the DARTs can remain substantially constant with respect to the content request rates. In fact, when the content-request rate is low, the average number of entries in the DARTs may be larger than the average number of entries in the PITs. This is because the DART entries are kept for long periods of time (e.g., seconds) regardless of whether or not the routes they denote are actually used by Interests and their responses. On the other hand, a PIT entry is deleted immediately after the corresponding Interest is satisfied. However, as the content request rate increases, the size of a PIT can be more than 10 times the size of a DART, because a given DART entry can be used for many Interests, whereas a different PIT entry is needed for each Interest. In general, it can be expected that the cost of maintaining DART entries that may not be used at light loads can be compensated for by the significant reduction in the signaling delays derived from many Interests forwarded using existing DART entries at high loads.

**Computer and Communication System**

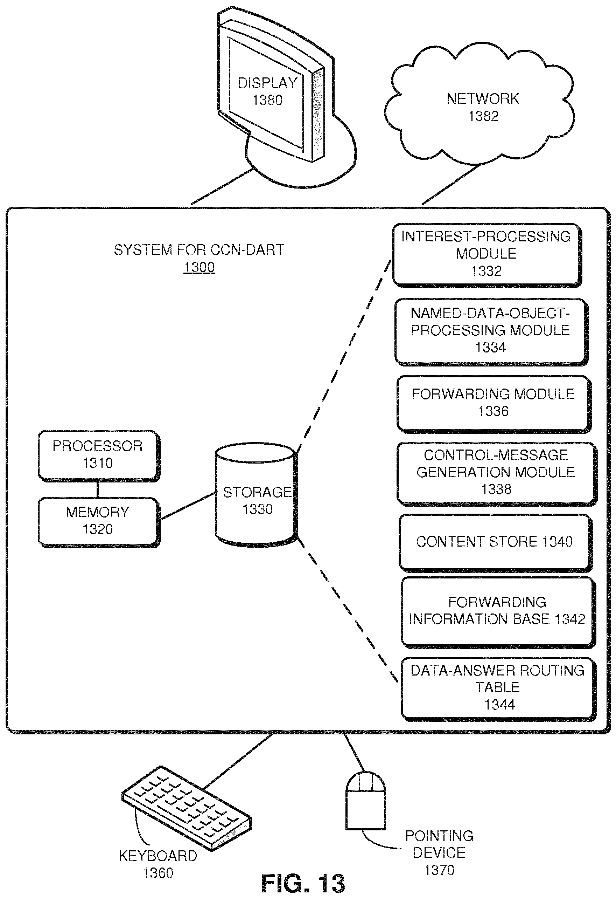

FIG. 13 illustrates an exemplary system for On-demand Content Exchange with Adaptive Naming, in accordance with an embodiment of the present invention. A system 1300 for On-demand Content Exchange with Adaptive Naming comprises a processor 1310, a memory 1320, and a storage 1330. Storage 1330 typically stores instructions that can be loaded into memory 1320 and executed by processor 1310 to perform the methods mentioned above. In one embodiment, the instructions in storage 1330 can implement an Interest-processing module 1332, a named-data-object-processing module 1334, a forwarding module 1336, and a control-message generation module 1338, all of which can be in communication with each other through various means. Storage 1330 can further comprise a number of data structures, such as a Content Store 1340, a Forwarding Information Base 1342, and a data-answer routing table 1344.

In some embodiments, modules 1332, 1334, 1336, and 1338 can be partially or entirely implemented in hardware and can be part of processor 1310. Further, in some embodiments, the system may not include a separate processor and memory. Instead, in addition to performing their specific tasks, modules 1332, 1334, 1336, and 1338, either separately or in concert, may be part of general- or special-purpose computation engines.

Storage 1330 stores programs to be executed by processor 1310. Specifically, storage 1330 stores a program that implements a system (application) for On-demand Content Exchange with Adaptive Naming. During operation, the application program can be loaded from storage 1330 into memory 1320 and executed by processor 1310. As a result, system 1300 can perform the functions described above. System 1300 can be coupled to an optional display 1380 (which can be a touchscreen display), keyboard 1360, and pointing device 1370, and can also be coupled via one or more network interfaces to network 1382.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, methods and processes described herein can be included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

The above description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the scope of the claims.

Thus, the present invention is not limited to the embodiments shown.

## Claims

1. A router (125) in an information-centric network, ICN, comprising:

   a receiving module configured to receive an interest (155) for a piece of content, wherein the interest indicates a name associated with the piece of content;
   an interest-processing module (1108) configured to:

   determine whether the interest can be forwarded;
   in response to determining that the interest can be forwarded to a second router (130), obtain a label comprising a destination and return token, "dart", that is specific to the second router, the dart denoting a route established between the router and the second router; and
   attach the label to the interest; and

   a forwarding module (1110) configured to forward the interest (160) to the second router with the attached label.

2. The router of claim 1 wherein attaching the label to the interest comprises replacing a predecessor dart with a successor dart according to a Data-Answer Routing Table, DART, (300) mapping maintained at the router, wherein the predecessor dart comprises the dart received in the interest from a preceding router (115) from which the interest (155) was received and wherein the successor dart comprises a dart for a router (130) in a path towards an anchor router (135) that advertises a prefix for the piece of content.

3. The router of claim 1 or 2 wherein the interest comprises a nonce (402) specific to an originator of the interest.

4. The router of any of claims 1 to 3 wherein the router further comprises a DART (300) storing a mapping of predecessor to successor routers along paths to anchor routers, wherein a predecessor router comprises the preceding router (115) from which the interest was received and a successor router (130) comprises a router in a path towards an anchor router (135), the anchor router advertising a prefix for the piece of content.

5. The router of claim 1, wherein the forwarding module is further configured to:
in response to the interest-processing module (1108) determining that the interest cannot be forwarded, send a response to the interest.

6. The router of claim 5,
wherein the interest-processing module (1108) is configured to determine that the interest cannot be forwarded based on one of:

the piece of content cannot be found;
no route can be found to a destination router advertising the piece of content; and
the interest is traversing a loop; and

wherein the response sent by the forwarding module includes a negative acknowledgment.

7. The router of claim 6, wherein the interest further indicates a hop count to a destination router advertising the piece of content, and wherein the interest-processing module (1108) is configured to determine that the interest is traversing the loop based on routing information stored in the router (125) and the hop count.

8. A computer-executable method, comprising:

receiving, by a first node in an information-centric network, ICN, an interest (155) for a piece of content, wherein the interest indicates a name associated with the piece of content;
determining whether the interest can be forwarded;
in response to determining that the interest can be forwarded to a second node (130), obtaining a label comprising a destination and return token, "dart", that is specific to the second node, the dart denoting a route established between the first node and the second node;
attaching the label to the interest; and
forwarding the interest (160) to the second node with the attached label.

9. The method of claim 8 wherein attaching the label to the interest comprises replacing a predecessor dart with a successor dart according to a DART mapping (300) maintained at the first node, wherein the predecessor dart comprises the dart received in the interest from a preceding node (115) from which the interest (155) was received and wherein the successor dart comprises a dart for a node (130) in a path towards an anchor node (135) that advertises a prefix for the piece of content.

10. The method of claim 8 or 9 wherein the interest comprises a nonce (402) specific to the originator of the interest.

11. The method of any of claims 8 to 10 further comprising storing a DART storing a mapping of predecessor to successor nodes along paths to anchor nodes, wherein a predecessor node comprises a preceding node (115) from which the interest was received and a successor node (130) comprises a node in a path towards an anchor node (135), the anchor node advertising a prefix for the piece of content.

12. The method of claim 8, further comprising:
in response to determining that the interest cannot be forwarded, sending a response to the interest.

13. The method of claim 12,
wherein determining that the interest cannot be forwarded involves one of:

determining that the piece of content cannot be found;
determining that no route can be found to a node advertising the piece of content; and
determining that the interest is traversing a loop; and

wherein the response includes a negative acknowledgment.

14. A non-transitory computer-readable storage medium storing instructions that when executed by a computing device cause the computing device to perform a method, the method comprising:

receiving, by a first node in an information-centric network, ICN, an interest (155) for a piece of content, wherein the interest indicates a name associated with the piece of content;
determining whether the interest can be forwarded;
in response to determining that the interest can be forwarded to a second node (130), obtaining a label comprising a destination and return token, "dart", that is specific to the second node, the dart denoting a route established between the first node and the second node;
attaching the label to the interest; and
forwarding the interest (160) to the second node with the attached label.

15. The computer readable storage medium of claim 14 further storing instructions that, when executed by a computing device, cause the computing device to perform the method of any of claims 9 to 13.

**Patentansprüche**

1. Router (125) in einem informationszentrischen Netzwerk ICN, der Folgendes umfasst:

ein Empfangsmodul, konfiguriert zum Empfangen eines Interesses (155) an einem Stück Inhalt, wobei das Interesse einen mit dem Stück Inhalt assoziierten Namen anzeigt;
ein Interesseverarbeitungsmodul (1108), konfiguriert zum:

Feststellen, ob das Interesse weitergeleitet werden kann;
Einholen, als Reaktion auf die Feststellung, dass das Interesse zu einem zweiten Router (130) weitergeleitet werden kann, eines Etiketts, das ein Ziel und ein für den zweiten Router spezifisches Rückgabe-Token "Dart" umfasst, wobei der "Dart" eine zwischen dem Router und dem zweiten Router eingerichtete Route bezeichnet; und
Anhängen des Etiketts an das Interesse; und

ein Weiterleitungsmodul (1110), konfiguriert zum Weiterleiten des Interesses (160) zu dem zweiten Router mit dem angehängten Etikett.

2. Router nach Anspruch 1, wobei das Anhängen des Etiketts an das Interesse das Ersetzen eines Vorgänger-Dart durch einen Nachfolger-Dart gemäß einem am Router geführten DART-(Data-Answer Routing Table)-(300)-Mapping beinhaltet, wobei der Vorgänger-Dart den in dem Interesse von einem Vorgänger-Router (115) empfangenen Dart umfasst, von dem das Interesse (155) empfangen wurde, und wobei der Nachfolger-Dart einen Dart für einen Router (130) in einem Pfad zu einem Anker-Router (135) umfasst, der ein Präfix für das Stück Inhalt annonciert.

3. Router nach Anspruch 1 oder 2, wobei das Interesse eine Nonce (402) umfasst, die für einen Verfasser des Interesses spezifisch ist.

4. Router nach einem der Ansprüche 1 bis 3, wobei der Router ferner einen DART (300) umfasst, der ein Mapping von Vorgänger- auf Nachfolger-Router über Pfade zu Anker-Routern speichert, wobei ein Vorgänger-Router den vorhergehenden Router (115) umfasst, von dem das Interesse empfangen wurde, und ein Nachfolger-Router (130) einen Router in einem Pfad in Richtung eines Anker-Routers (135) umfasst, wobei der Anker-Router ein Präfix für das Stück Inhalt annonciert.

5. Router nach Anspruch 1, wobei das Weiterleitungsmodul ferner konfiguriert ist zum:
Senden einer Antwort zu dem Interesse als Reaktion darauf, dass das Interesseverarbeitungsmodul (1108) feststellt, dass das Interesse nicht weitergeleitet werden kann.

6. Router nach Anspruch 5,
wobei das Interesseverarbeitungsmodul (1108) konfiguriert ist zum Feststellen, dass das Interesse nicht weitergeleitet werden kann, auf der Basis von einem der Folgenden:

das Stück Inhalt kann nicht gefunden werden;
es kann keine Route zu einem Ziel-Router gefunden werden, der das Stück Inhalt annonciert; und
das Interesse durchläuft eine Schleife; und

wobei die vom Weiterleitungsmodul gesendete Antwort eine negative Quittierung beinhaltet.

7. Router nach Anspruch 6, wobei das Interesse ferner eine Sprungzahl zu einem das Stück Inhalt annoncierenden Ziel-Router anzeigt und wobei das Interesseverarbeitungsmodul (1108) konfiguriert ist zum Feststellen, dass das Interesse die Schleife durchquert, auf der Basis von im Router (125) gespeicherten Routing-Informationen und der Sprungzahl.

8. Computerausführbares Verfahren, das Folgendes beinhaltet:

Empfangen, durch einen ersten Knoten in einem informationszentrischen Netzwerk ICN, eines Interesses (155) an einem Stück Inhalt, wobei das Interesse einen mit dem Stück Inhalt assoziierten Namen anzeigt;
Feststellen, ob das Interesse weitergeleitet werden kann;
Einholen, als Reaktion auf die Feststellung, dass das Interesse zu einem zweiten Knoten (130) weitergeleitet werden kann, eines Etiketts, das ein Ziel und ein für den zweiten Knoten spezifisches Rückgabe-Token "Dart" umfasst, wobei der Dart eine zwischen dem ersten Knoten und dem zweiten Knoten eingerichtete Route bezeichnet;
Anhängen des Etiketts an das Interesse; und
Weiterleiten des Interesses (160) zum zweiten Knoten mit dem angehängten Etikett.

9. Verfahren nach Anspruch 8, wobei das Anhängen des Etiketts an das Interesse das Ersetzen eines Vorgänger-Darts durch einen Nachfolger-Dart gemäß einem am ersten Knoten geführten Dart-Mapping (300) beinhaltet, wobei der Vorgänger-Dart den Dart umfasst, der in dem Interesse von einem vorangehenden Knoten (115) empfangen wurde, von dem das Interesse (155) empfangen wurde, und wobei der Nachfolger-Dart einen Daten für einen Knoten (130) in einem Pfad in Richtung eines Ankerknotens (135) umfasst, der einen Präfix für das Stück Inhalt annonciert.

**10.** Verfahren nach Anspruch 8 oder 9, wobei das Interesse eine Nonce (402) umfasst, die für den Verfasser des Interesses spezifisch ist.

**11.** Verfahren nach einem der Ansprüche 8 bis 10, das ferner das Speichern eines DART beinhaltet, der ein Mapping von Vorgänger- auf Nachfolgerknoten über Pfade zu Ankerknoten speichert, wobei ein Vorgängerknoten einen vorhergehenden Knoten (115) umfasst, von dem das Interesse empfangen wurde, und ein Nachfolgerknoten (130) einen Knoten in einem Pfad in Richtung eines Ankerknotens (135) umfasst, wobei der Ankerknoten einen Präfix für das Stück Inhalt annonciert.

**12.** Verfahren nach Anspruch 8, das ferner Folgendes beinhaltet:
Senden einer Antwort auf das Interesse als Reaktion auf die Feststellung, dass das Interesse nicht weitergeleitet werden kann.

**13.** Verfahren nach Anspruch 12,
wobei das Feststellen, dass das Interesse nicht weitergeleitet werden kann, eines der Folgenden beinhaltet:

Feststellen, dass das Stück Inhalt nicht gefunden werden kann;
Feststellen, dass keine Route zu einem Knoten gefunden werden kann, der das Stück Inhalt annonciert; und
Feststellen, dass das Interesse eine Schleife durchläuft; und

wobei die Antwort eine negative Quittierung beinhaltet.

**14.** Nichtflüchtiges, computerlesbares Speichermedium, auf dem Befehle gespeichert sind, die bei Ausführung durch ein Computergerät bewirken, dass das Computergerät ein Verfahren durchführt, wobei das Verfahren Folgendes beinhaltet:

Empfangen, durch einen ersten Knoten in einem informationszentrischen Netzwerk ICN, eines Interesses (155) an einem Stück Inhalt, wobei das Interesse einen mit dem Stück Inhalt assoziierten Namen anzeigt;
Feststellen, ob das Interesse weitergeleitet werden kann;
Einholen, als Reaktion auf die Feststellung, dass das Interesse zu einem zweiten Knoten (130) weitergeleitet werden kann, eines Etiketts, das ein Ziel und ein für den zweiten Knoten spezifisches Rückgabe-Token "Dart" umfasst, wobei der Dart eine zwischen dem ersten Knoten und dem zweiten Knoten eingerichtete Route bezeichnet;

Anhängen des Etiketts an das Interesse; und
Weiterleiten des Interesses (160) zum zweiten Knoten mit dem angehängten Etikett.

**15.** Computerlesbares Speichermedium nach Anspruch 14, auf dem ferner Befehle gespeichert sind, die bei Ausführung durch ein Computergerät bewirken, dass das Computergerät das Verfahren nach einem der Ansprüche 9 bis 13 durchführt.

**Revendications**

**1.** Routeur (125) dans un réseau centré sur l'information, ICN, comprenant :

un module de réception configuré pour recevoir un intérêt (155) pour un élément de contenu, dans lequel l'intérêt indique un nom associé à l'élément de contenu;
un module de traitement d'intérêts (1108) configuré pour :

déterminer si l'intérêt peut être transféré;
en réponse à la détermination que l'intérêt peut être transféré à un second routeur (130), obtenir une étiquette comprenant un jeton de destination et de retour, «fléchette», qui est spécifique au second routeur, la fléchette désignant une route établie entre le routeur et le second routeur; et
attacher l'étiquette à l'intérêt; et

un module de transfert (1110) configuré pour transférer l'intérêt (160) au second routeur avec l'étiquette attachée.

**2.** Routeur selon la revendication 1, dans lequel l'attachement de l'étiquette à l'intérêt comprend de remplacer une fléchette de prédécesseur par une fléchette de successeur conformément à un mappage de table de routage de données-réponses, DART, (300) maintenu au niveau du routeur, dans lequel la fléchette de prédécesseur comprend la fléchette reçue dans l'intérêt à partir d'un routeur précédent (115) à partir duquel l'intérêt (155) a été reçu, et dans lequel la fléchette de successeur comprend une fléchette pour un routeur (130) dans un chemin menant à un routeur d'ancrage (135) qui annonce un préfixe pour l'élément de contenu.

**3.** Routeur selon la revendication 1 ou 2, dans lequel l'intérêt comprend un nonce (402) spécifique à un initiateur de l'intérêt.

**4.** Routeur selon l'une quelconque des revendications 1 à 3, dans lequel le routeur comprend en outre une DART (300) stockant un mappage des routeurs prédécesseurs à successeurs le long des chemins menant à des routeurs d'ancrage, dans lequel un routeur prédécesseur comprend le routeur précédent (115) à partir duquel l'intérêt a été reçu, et un routeur successeur (130) comprend un routeur dans un chemin en direction d'un routeur d'ancrage (135), le routeur d'ancrage annonçant un préfixe pour l'élément de contenu.

5. Routeur selon la revendication 1, dans lequel le module de transfert est en outre configuré pour :
en réponse au module de traitement d'intérêts (1108) déterminant que l'intérêt ne peut pas être transféré, envoyer une réponse à l'intérêt.

6. Routeur selon la revendication 5, dans lequel le module de traitement d'intérêts (1108) est configuré pour déterminer que l'intérêt ne peut pas être transféré sur la base de l'une des raisons suivantes :

l'élément de contenu ne peut pas être trouvé;
aucun itinéraire ne peut être trouvé vers un routeur de destination annonçant l'élément de contenu; et
l'intérêt traverse une boucle; et

dans lequel la réponse envoyée par le module de transfert comprend un accusé de réception négatif.

7. Routeur selon la revendication 6, dans lequel l'intérêt indique en outre un nombre de sauts vers un routeur de destination annonçant l'élément de contenu, et dans lequel le module de traitement d'intérêts (1108) est configuré pour déterminer que l'intérêt traverse la boucle sur la base d'informations de routage stockées dans le routeur (125) et du nombre de sauts.

8. Procédé exécutable par ordinateur, comprenant de :

recevoir, par un premier noeud dans un réseau centré sur l'information, ICN, un intérêt (155) pour un élément de contenu, dans lequel l'intérêt indique un nom associé à l'élément de contenu;
déterminer si l'intérêt peut être transféré;
en réponse à la détermination que l'intérêt peut être transféré à un second noeud (130), obtenir une étiquette comprenant un jeton de destination et de retour, «fléchette», qui est spécifique au second noeud, la fléchette désignant une route établie entre le premier noeud et le second noeud;
attacher l'étiquette à l'intérêt; et
transférer l'intérêt (160) au second noeud avec l'étiquette attachée.

9. Procédé selon la revendication 8, dans lequel l'attachement de l'étiquette à l'intérêt comprend de remplacer une fléchette de prédécesseur par une fléchette de successeur conformément à un mappage DART (300) maintenu sur le premier noeud, dans lequel la fléchette de prédécesseur comprend la fléchette reçue dans l'intérêt à partir d'un noeud précédent (115) à partir duquel l'intérêt (155) a été reçu, et dans lequel la fléchette suivante comprend une fléchette pour un noeud (130) dans un chemin menant à un noeud d'ancrage (135) qui annonce un préfixe pour l'élément de contenu.

10. Procédé selon la revendication 8 ou 9, dans lequel l'intérêt comprend un nonce (402) spécifique à l'initiateur de l'intérêt.

11. Procédé selon l'une quelconque des revendications 8 à 10, comprenant en outre de stocker une DART stockant un mappage de noeuds prédécesseurs à successeurs le long de chemins d'accès menant à des noeuds d'ancrage, dans lequel un noeud prédécesseur comprend un noeud précédent (115) à partir duquel l'intérêt a été reçu, et un noeud successeur (130) comprend un noeud dans un chemin menant à un noeud d'ancrage (135), le noeud d'ancrage annonçant un préfixe pour l'élément de contenu.

12. Procédé selon la revendication 8, comprenant en outre de :
en réponse à la détermination que l'intérêt ne peut pas être transféré, envoyer une réponse à l'intérêt.

13. Procédé selon la revendication 12,
dans lequel la détermination que l'intérêt ne peut être transféré implique l'un parmi :

la détermination que l'élément de contenu ne peut pas être trouvé;
la détermination qu'aucun itinéraire ne peut être trouvé vers un noeud annonçant l'élément de contenu; et
la détermination que l'intérêt traverse une boucle; et

dans lequel la réponse comprend un accusé de réception négatif.

14. Support de stockage lisible par ordinateur non transitoire stockant des instructions qui, lorsqu'elles sont exécutées par un dispositif informatique, amènent le dispositif informatique à exécuter un procédé, le procédé comprenant de :

recevoir, par un premier noeud dans un réseau centré sur l'information, ICN, un intérêt (155) pour un élément de contenu, dans lequel l'intérêt indique un nom associé à l'élément de contenu;
déterminer si l'intérêt peut être transféré;
en réponse à la détermination que l'intérêt peut être transféré à un second noeud (130), obtenir une étiquette comprenant un jeton de destination et de retour, «fléchette», qui est spécifique au second noeud, la fléchette désignant une route établie entre le premier noeud et le second noeud;

attacher l'étiquette à l'intérêt; et

transférer l'intérêt (160) au second noeud avec l'étiquette attachée.

15. Support de stockage lisible par ordinateur selon la revendication 14, stockant en outre des instructions qui, lorsqu'elles sont exécutées par un dispositif informatique, amènent le dispositif informatique à exécuter le procédé selon l'une quelconque des revendications 9 à 13.

**FIG. 1**

FORWARDING INFORMATION BASE 200

| NAME PREFIX | NEXT HOP | HOP COUNT | ANCHOR | MIN HOP COUNT |
|---|---|---|---|---|
| $n(1)^*$ | $S_{n(1)^{*i}}$ | $h(i, n(1)^*, q)$, $q$ belongs to $S_{n(1)^{*i}}$ | $a(i, n(1)^*, q)$ | $h(i, n(1)^*)$ |
| ... | ... | ... | ... | ... |
| $n(j)^*$ | $S_{n(j)^{*i}}$ | $h(i, n(j)^*, q)$, $q$ belongs to $S_{n(j)^{*i}}$ | $a(i, n(j)^*, q)$ | $h(i, n(j)^*)$ |
| ... | ... | ... | ... | ... |

202

**FIG. 2**

EP 3 148 128 B1

DATA-ANSWER ROUTING TABLE 300

| NEIGHBOR | ANCHOR | PREDECESSOR | PREDECESSOR dart | SUCCESSOR | SUCCESSOR dart | HOP COUNT | LIFETIME |
|---|---|---|---|---|---|---|---|
| $p$ | $a^i(a,p)$ | $p^i(a,p)$ | $pd^i(a,p)$ | $s^i(a,p)$ | $sd^i(a,p)$ | $h^i(a,p)$ | $LT^i(a,p)$ |
| $q$ | $a^i(a,q)$ | $p^i(a,q)$ | $pd^i(a,q)$ | $s^i(a,q)$ | $sd^i(a,q)$ | $h^i(a,q)$ | $LT^i(a,q)$ |
| ... | ... | ... | ... | ... | ... | ... | ... |

304

302

**FIG. 3**

EP 3 148 128 B1

EP 3 148 128 B1

ORIGIN NONCE TABLE 400

LOCAL CONSUMER          NONCE
--------------------------------------------------

$c$                          $n^i$

...                        ...         402

**FIG. 4A**

DESTINATION NONCE TABLE 410

NONCE          (ROUTER, dart)
--------------------------------------------------

$ID^i(k)$          $(k, dart^i(k))$; ...

...                        ...         412

**FIG. 4B**

500

FIG. 5A

500

FIG. 5B

600

# FIG. 6A

600

# FIG. 6B

600

# FIG. 6C

## Algorithm for Processing Interest from Local Consumer
## at Router $i$

1: **function** Interest_Source

2: **INPUT**: $CS^i$, $FIB^i$, $DART^i$, $ONT^i$, $I[n(j),nil,c,nil]$;

3: **if** $n(j) \in CS^i$ **then** send $D[n(j),nil,c,nil]$;

4: **if** $n(j) \notin CS^i \wedge n(j)^* \in CS^i$ **then** send $NI[n(j), \text{no content}, c, nil]$;

5: **if** $n(j) \notin CS^i \wedge n(j)^* \notin CS^i$ **then**

6:    **if** $n(j)^* \notin FIB^i$ **then**

7:       %No route exist to $n(j)^*$

      send $NI[n(j), \text{no route}, c, nil]$

8:    **else**

9:       **for each** $v \in S^i_{n(j)^*}$ **by rank do**

10:          %Interest can be forwarded to $v$;

          $a = a(i, n(j)^*, v)$;

11:             $\exists DART^i(a,i)(s^i(a,i) = v)$ **then**

12:                %Interest can be forwarded using entry $DART^i(a,i)$

             $ID^I(i) = ONT^i(c)$;

             $h^I(i) = h^i(a,i)$; $dart^I(i) = sd^i(a,i)$;

             send $I[n(j), h^I(i), ID^I(i), dart^I(i)]$ to $s^i(a,i)$; **return**

13:             **else**

14:                create entry $DART^i(a,i)$;

                $a^i(a,i) = a$; compute $SD \neq sd^i(p,q) \forall DART^i(p,q)$;

                $p^i(a,i) = i$; $pd^i(a,i) = SD$;

                $s^i(a,i) = v$; $sd^i(a,i) = SD$;

                $h^i(a,i) = h(i, n(j)^*, v)$; $LT^i(a,i) = MLT$;

15:                create and send Interest

             $ID^I(i) = ONT^i(c)$

             $h^I(i) = h^i(a,i)$; $dart^I(i) = sd^i(a,i)$;

             send $I[n(j), h^I(i), ID^I(i), dart^I(i)]$ to $s^i(a,i)$; **return**

16:             **end if**

17:          **end for**

18:    **end if**

19: **end if**

20: **end function**

## FIG. 7

## Algorithm for Processing Interest from Router $k$ at Router $i$

---

**function** DART_Mapping

**INPUT**: $CS^i$, $FIB^i$, $DART^i$, $I[n(j), h^I(k), ID^I(k), dart^I(k)]$ ;

**if** $n(j) \in CS^i$ **then call** Response $(D[n(j), sig(j), ID^I(k), dart^I(k)])$;

**if** $n(j) \notin CS^i \wedge n(j)^* \in CS^i$

    CODE = no content;

    **call** Response $(NI[n(j), CODE, ID^I(k), dart^I(k)])$;

**end if**

**if** $n(j) \notin CS^i \wedge n(j)^* \notin CS^i$ **then**

    **if** $\exists DART^i(a,k)(pd^i(a,k) = dart^I(k))$ **then**

    %Interest can be forwarded using entry $DART^i(a,k)$ ;

        $h^I(i) = h^i(a,k)$ ; $ID^I(i) = ID^I(k)$ ; $dart^I(i) = sd^i(a,k)$ ;

        send $I[n(j), h^I(i), ID^I(i), dart^I(i)]$ to $s^i(a,k)$ ;

    **else**

        **if** $n(j)^* \notin FIB^i$ **then**

            %No route exist to $n(j)^*$

            CODE = no route; **call** Response $(NI[n(j), CODE, ID^I(k), dart^I(k)])$;

        **else**

            **for each** $v \in S^i_{n(j)^*}$ **by rank do**

                **if** $h^I(k) > h(i, n(j)^*, v)$ **then**

                    % Interest can be forwarded to $v$:

                    $a = a(i, n(j)^*, v)$ ;

                    compute $SD \neq sd^i(p,q) \forall DART^i(p,q)$ ;

                    create entry $DART^i(a,k)$ ;

                    $h^i(a,k) = h(i, n(j)^*, v)$ ; $LT^i(a,k) = MLT$ ;

                    $a^i(a,k) = a$ ; $p^i(a,k) = k$ ; $pd^i(a,k) = dart^I(k)$ ;

                    $s^i(a,k) = v$ ; $sd^i(a,k) = SD$ ;

                    create and forward Interest

                    $h^I(i) = h^i(a,k)$ ; $ID^I(i) = ID^I(k)$ ; $dart^I(i) = sd^i(a,k)$ ;

                    send $I[n(j), h^I(i), ID^I(i), dart^I(i)]$ to $v$;

                    **return**

                **end if**

            **end for**

            % Interest may be traversing a loop:

            CODE = loop; **call** Response $(NI[n(j), CODE, ID^I(k), dart^I(k)])$;

        **end if**

    **end if**

**end if**

**end function**

---

## FIG. 8

Algorithm for Responding to a Remote Interest at Router $i$

1: **function** Response

2: **INPUT:** $CS^i$, $FIB^i$, $DART^i$, $DNT^i$,

$(D[n(j), sig(j), ID^I(k), dart^I(k)]\_NI[n(j), \mathrm{CODE}, ID^I(k), dart^I(k)])$;

3: $dart_k^i = dart^I(k)$;

add tuple $[k, dart_k^i]$ to the list of tuples for entry $DNT^i(ID^i(k))$;

4: select tuple $[n, dart_n^i] \in DNT^i(ID^i(k))$;

5: **if** response $= D[n(j), sig(j), ID^I(k), dart^I(k)]$ **then**

6: send $D[n(j), sig(j), ID^I(k), dart^I(n)]$ to neighbor $n$

7: **end if**

8: **if** response $= NI[n(j), \mathrm{CODE}, ID^I(k), dart^I(k)]$ **then**

9: send $NI[n(j), \mathrm{CODE}, ID^I(k), dart^I(n)]$ to neighbor $n$

10: **end if**

11: **end function**

# FIG. 9

Algorithm for Processing NDO messages at Router $i$

1: **function** NDO_Handling
2: **INPUT**: $DART^i$, $CS^i$, $D[n(j), sig(j), ID^I(q), dart^I(q)]$;
3: [o] verify $sig(j)$;
4: [o] **if** verification fails **then** discard $D[n(j), sig(j), ID^I(q), dart^I(q)]$
5: **if** $\exists DART^i(a,k)(sd^i(a,k) = dart^I(q))$ **then**
6:    % NDO message can be forwarded to predecessor $k$;
       $dart^I(i) = pd^i(a,k)$ ; $ID^I(i) = ID^I(q)$
       send $D[n(j), sig(j), ID^I(i), dart^I(i)]$ to $k$;
       [o] store the content with name $n(j)$ in $CS^i$;
7: **end if**
8: **end function**

# FIG. 10A

Algorithm for Processing NACKs at Router $i$

1: **function** NACK_Handling
2: **INPUT**: $DART^i$, $NI[n(j), CODE, ID^I(q), dart^I(q)]$;
3: **if** $\exists DART^i(a,k)(sd^i(a,k) = dart^I(q))$ **then**
4:    % NACK can be forwarded to predecessor $k$;
       $dart^I(i) = pd^i(a,k)$ ; $ID^I(i) = ID^I(q)$
       send $NI[n(j), CODE, ID^I(i), dart^I(i)]$ to $k$;
5: **end if**
6: **end function**

# FIG. 10B

FIG. 11

$[1202, 1202(k)]=[1212, 1210(m)];$

$[1210, 1210(m)]=[1208, 1212(j)];$

1210 → 1212

1222

ONT$^{1202}$:
$c_p=ID^{1202}_p; c_q=ID^{1202}_q$

DART$^{1202}$:
$[1202, 1202(k)]=[1210, 1202(k)];$
$[1202, 1202(i)]=[1204, 1202(i)];$

1202

1208

DNT$^{1208}$:
$ID^{1202}_p$: $[1206, 1206(i)]; [1212, 1212(j)]$
$ID^{1202}_q$: $[1206, 1206(i)]; [1212, 1212(j)]$
$ID^{1214}_w$: $[1206, 1206(k)];$

1224

$[1202, 1202(i)]=[1206, 1204(j)];$
$[1202, 1202(k)]=[1206, 1204(u)];$

1204 → 1206

1226

$[1204, 1204(j)]=[1208, 1206(i)];$
$[1204, 1204(u)]=[1208, 1206(k)];$

1214

ONT$^{1214}$:
$c_w=ID^{1214}_w$;

DART$^{1214}$:
$[1214, 1214(k)]=[1204, 1214(k)];$

1200

## FIG. 12

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8160069 B
- US 14572608 B

- US 20160173386 A1

**Non-patent literature cited in the description**

- **M ED. MOSKO.** *CCNx Label Forwarding (CCNLF),* 21 July 2014

- **YI CHENG et al.** *A case for stateful forwarding plane,* 29 January 2013, 779-791